# EUROPÄISCHE PATENTANMELDUNG

(11) **EP 4 841 377 A1**
(43) Veröffentlichungstag der Anmeldung: **18.11.2026**
(21) Anmeldenummer: 26177043.2
(22) Anmeldetag: 06.05.2026
(51) Int. Cl.: G05B 19/418, B29D 30/00, B29D 30/42

(54) **FERTIGUNGSANLAGE FÜR GÜRTEL- UND/ODER KARKASSENBAND IN DER REIFENINDUSTRIE, VERFAHREN ZUR ÜBERWACHUNG EINER SOLCHEN FERTIGUNGSANLAGE, COMPUTERPROGRAMM UND ELEKTRONISCH LESBARER DATENTRÄGER**

(30) Priorität: 15.05.2025 DE 102025118823
(71) Anmelder: Fischer TireTech Germany GmbH, 96224 Burgkunstadt (DE)
(72) Erfinder: Schmidt, Frank, 95349 Thurnau (DE)
(74) Vertreter: Lindner Blaumeier Patent- und Rechtsanwälte

(57) **Zusammenfassung**

Fertigungsanlage für Gürtel- und/oder Karkassenband in der Reifenindustrie, aufweisend mehrere materialbearbeitende und/oder materialfördernde, in Abhängigkeit von Betriebsparametern ansteuerbare Fertigungskomponenten, eine Steuereinrichtung (17) zur Ansteuerung der Fertigungskomponenten und eine Bedieneinrichtung (19), wobei die Steuereinrichtung (17) eine Überwachungseinrichtung (18) zur Überwachung des Betriebs wenigstens einer zu überwachenden der Fertigungskomponenten aufweist, welche wenigstens eine Einzelschrittkomponente (34, 35, 36) zur Ausführung von Einzelschritten eines Zyklus zur Einwirkung auf das Material umfasst, wobei an der zu überwachenden Fertigungskomponente wenigstens ein Zykluszeiterfassungsmittel (22) zur Erfassung einer Zykluszeit des Zyklus vorgesehen ist und die Überwachungseinrichtung (18) aufweist:
- eine Überwachungseinheit (24) zur Auswertung von von dem Zykluszeiterfassungsmittel (22) erfassten Zykluszeiten hinsichtlich der Erfüllung wenigstens einer Maßnahmenbedingung, die das Vorliegen einer Anomalie im Fertigungsvorgang anzeigt, und
- eine Maßnahmeneinheit (25) zur Durchführung wenigstens einer einer erfüllten Maßnahmenbedingung zugeordneten Steuermaßnahme, die eine Ausgabe eines Hinweises auf das Vorliegen der entsprechenden Anomalie und/oder einen auf die Anomalie bezogenen Eingriff in den Fertigungsvorgang betrifft.

## Beschreibung

Die Erfindung betrifft eine Fertigungsanlage für Gürtel- und/oder Karkassenband in der Reifenindustrie, aufweisend mehrere materialbearbeitende und/oder materialfördernde, in Abhängigkeit von Betriebsparametern ansteuerbare Fertigungskomponenten, eine Steuereinrichtung zur Ansteuerung der Fertigungskomponenten und eine Bedieneinrichtung, wobei die Steuereinrichtung eine Überwachungseinrichtung zur Überwachung des Betriebs wenigstens einer zu überwachenden der Fertigungskomponenten aufweist, welche wenigstens eine Einzelschrittkomponente zur Ausführung von Einzelschritten eines Zyklus zur Einwirkung auf das Material umfasst. Daneben betrifft die Erfindung ein computerimplementiertes Verfahren zur Überwachung einer solchen Fertigungsanlage, ein Computerprogramm und einen elektronisch lesbaren Datenträger.

Fertigungsanlagen, in denen ein Ausgangsband, insbesondere klebriges Cordband, zu einem Endlosband als Fertigungsprodukt, das als Gürtelband oder Karkassenband in der Reifenindustrie verwendet wird, verarbeitet wird, sind im Stand der Technik grundsätzlich bekannt. Sie können - je nach Einsatzweck - auch als Gürtelanlage bzw. Karkassenanlage bezeichnet werden. Die Fertigungsanlage kann insgesamt auch als Maschine oder Einrichtung zur Verarbeitung eines Cordbands in der Reifenindustrie verstanden werden. Von dem Ausgangsband, insbesondere dem klebrigen Cordband, sei es ein Textilcordband oder ein Stahlcordband, werden Bandabschnitte abgetrennt und durch Spleißen ein Endlosband gefertigt. Das Ausgangsband ist üblicherweise zu einer Rolle gewickelt und in eine Abwickelstation aufgenommen, aus der es ausgewickelt wird und zunächst einer Schere, also einer Schneideinrichtung, zugeführt wird, in der von dem Ausgangsband einzelne Bandabschnitte geschnitten werden. Eine solche Schneideinrichtung ist beispielsweise aus DE 20 2013 103 082 U1 bekannt. Die vorlaufende Kante des Ausgangsbands wird mit einer als Rückzugeinrichtung ausgebildeten Fördereinrichtung, die auch als Vorschubeinrichtung bezeichnet werden kann und beispielsweise eine Zange aufweisen kann, erfasst und durch die Schneidvorrichtung, beispielsweise eine Schlagschere umfassend ein feststehendes Untermesser und ein bewegliches Obermesser, gezogen, wobei über die Ziehlänge die Breite des zu schneidenden Bandabschnitts definiert wird. Eine solche Fördereinrichtung respektive Zange beziehungsweise denkbare Teilkomponenten hiervon sind beispielsweise in DE 20 2013 102 341 U1 und DE 101 13 379 A1 beschrieben. Der geschnittene Bandabschnitt kann mittels einer Aufnahmeeinrichtung auf die Höhe einer Spleißeinrichtung bewegt werden, wie beispielsweise in DE 20 2005 011 692 U1 beschrieben. Er wird von einem Förderband als weitere Fördereinrichtung aufgenommen, über das das Ausgangsband vor dem Schnitt mittels der Rückzugeinrichtung, also der Zange, gezogen wird, und über welches Förderband der jeweils geschnittene Bandabschnitt zu der Spleißeinrichtung transportiert wird, in der die geschnittenen Bandabschnitte zu einem Endlosband aneinander gespleißt werden, jedoch mit unterschiedlicher Orientierung, verglichen mit dem Ausgangsband. In der Spleißeinrichtung wird die nachlaufende Kante des zuvor an das Endlosband angespleißten Bandabschnitts und die vorlaufende Kante des über das Förderband herangeförderten Bandabschnitts bezüglich einander positioniert, wonach mittels einer Spleißvorrichtung der Spleißeinrichtung die beiden Kanten miteinander verspleißt werden. Die Spleißvorrichtung weist hierzu beispielsweise ein Spleißwerkzeug, das einen Spleißkopf bzw. mehrere Spleißköpfe umfassen kann, auf. Dabei wird der Spleißkopf bzw. werden die Spleißköpfe den zuvor zueinander positionierten Kanten von oben zugeführt. Nach dem jeweiligen Aufsetzen der Spleißköpfe wird linear, im Verlauf der Spleißlinie, im angedrückten Zustand über das Bandmaterial in Richtung zu den seitlichen Bandkanten über das Bandmaterial gezogen. Die Spleißköpfe können lose laufen oder angetrieben sein. Bei dem Ziehen über das Bandmaterial wird dieses verdichtet und somit verspleißt. Auf diese Weise kann durch Aneinanderspleißen einer Vielzahl einzelner Bandabschnitte ein Endlosband hergestellt werden. Eine solche Spleißeinrichtung ist beispielsweise aus DE 20 2014 101 735 U1 bekannt.

In einer Aufwickelstation kann das Fertigungsprodukt dann aufwickelt werden, wobei nach der Spleißeinrichtung optional weitere Fertigungskomponten vorgesehen sein können, um das zusammengespleißte Endlosband zu bearbeiten. Beispielsweise kann die Fertigungsanlage einen Slitter und/oder eine Belegevorrichtung umfassen. In einer Belegevorrichtung kann ein gummiertes Band auf das Cordband als zusammengespleißtes Endlosband aufgebracht werden. Eine solche Belegestation hat die Aufgabe, die erzeugte Materialbahn, hier das zusammengespleißte Cordband, während des Herstellungsprozesses mit zusätzlichen Materialstreifen zu verstärken. Dabei werden Gummiprofilstreifen in Materialförderrichtung auf die zu verstärkende Materialbahn mittig und/oder versetzt aufgelegt. Dieser Vorgang verläuft kontinuierlich mit der Anlagengeschwindigkeit. Das Auflegen kann von oben und/oder von unten erfolgen. Des Weiteren werden häufig die Außenkanten der Materialbahn eingefasst, d.h. ein Gummistreifen wird von der Außenkante mit Überstand aufgelegt und um die Gummikante herumgelegt, um die an der Außenkante (= Schnittkante) freiliegenden Cordfäden zu ummanteln. Eine Belegevorrichtung wird beispielhaft durch DE 20 2014 101 731 U1 offenbart.

Bei der Fertigungskomponente Slitter handelt es sich um eine Längsteilvorrichtung, das heißt, die Materialbahn, hier das zusammengespleißte Endlosband, wird im Produktionsprozess bei Bedarf in mindestens zwei Materialstreifen getrennt. Dies dient zur Erhöhung der Ausbringung einer Fertigungsanlage. Als Slittermesser finden meistens Rundmesser Verwendung. Der Trennvorgang ist ein Schneiden der Materialbahn. In der Praxis findet die Bezeichnung "Slittern" ihre Anwendung. Die Fertigungskomponente Slitter ist konzipiert, um ein zugeführtes Endlosband in mindestens zwei oder mehrere Bandstreifen zu trennen. Die Materialbahn wird hierbei in definierte Materialbreiten geschnitten, welche gleiche oder unterschiedliche Bandstreifen erzielen. Slitter sind beispielsweise in DE 20 2013 104 649 U1, DE 20 2013 104 651 U1 und DE 20 2013 104 653 U1 beschrieben.

Die Beschreibung eines Fertigungsprodukts, das in einem Fertigungsprozess mittels einer solchen Fertigungsanlage angefertigt werden soll, wird durch einen Betriebsparametersatz von für diesen Fertigungsprozess unveränderlichen Betriebsparameters vorgegeben, der üblicherweise als Rezept oder MES bezeichnet wird. Neben einer allgemeinen Rezept-Identifikation (Rezept-ID) kann ein Rezept beispielsweise den in der Schere anzuwendenden Schnittwinkel und die gewünschte Breite der als Gürtelband oder Karkassenband erhaltenen Materialbahnen umfassen. Auch ein Typ des zu verwendenden Ausgangsbandes kann durch das Rezept beschrieben sein. Ein Rezept wird also hauptsächlich durch die Anforderungen an das Fertigungsprodukt beschrieben und ist von der konkreten Fertigungsanlage unabhängig. Es kann allerdings Anforderungen an die Fertigungsgeschwindigkeit und/oder die Ausbringung, also die produzierte Menge pro Zeiteinheit, enthalten.

Tritt bei der Produktion eines Gürtel- oder Karkassenbandes ein Problem, beispielsweise eine Fehlfunktion, eine Beschädigung und/oder ein Verschleiß an einer Fertigungskomponente, eingeschränkte Sensordatenerfassung, ein Steuerfehler oder dergleichen auf, kann es zu verschiedenen, ungewünschten Effekten kommen. Während in weniger problematischen Fällen die Ausbringung beispielsweise deutlich reduziert werden kann, führen derartige Abweichungen vom ordnungsgemäßen Ablauf eines Fertigungsvorgangs häufig auch zu einer Ausschussproduktion oder in seltenen Fällen sogar zu einer, gegebenenfalls weiteren, Beschädigung einer Fertigungskomponente. Daher ist es bekannt, den Betrieb von Fertigungsanlagen während eines Fertigungsvorgangs durch einen Benutzer regelmäßig oder dauerhaft zu überwachen, gegebenenfalls unterstützt durch Sensorik, die beispielsweise Abweichungen vom gewünschten Fertigungsergebnis detektieren kann. Eine Feineinstellung und Optimierung des Fertigungsvorgangs erfolgt mittels visueller Beobachtung durch einen Benutzer, mithin benutzerabhängig, da häufig ein unterschiedliches Empfinden vorliegt. Für viele Anpassungen von Betriebsparametern muss ein Stillstand der Fertigungsanlagen erfolgen, was auch für eine Überprüfung bei potentiellen Problemen gilt. Die manuelle und genaue Erfassung während des Fertigungsvorgangs gestaltet sich schwierig. Hierzu kommt, dass das unterschiedliche Zusammenspiel und die Optimierung einzelner Komponenten aufgrund häufiger Rezeptwechsel, also Veränderungen im zu fertigenden Produkt, äußerst vielfältig ist. Daher ist eine frühzeitige Erkennung von Abweichungen während des Fertigungsvorgangs durch den Benutzer zusätzlich erschwert. Eine vorausschauende Wartung ist nicht möglich.

Der Erfindung liegt daher die Aufgabe zugrunde, eine einfach umsetzbare, hochgenaue und robuste Überwachung des Betriebs einer Fertigungsanlage für Gürtel- und Karkassenband in der Reifenindustrie anzugeben.

Zur Lösung dieser Aufgabe ist bei einer Fertigungsanlage der eingangs genannten Art erfindungsgemäß vorgesehen, dass an der zu überwachenden Fertigungskomponente wenigstens ein Zykluszeiterfassungsmittel zur Erfassung einer Zykluszeit des Zyklus vorgesehen ist und die Überwachungseinrichtung aufweist:
- eine Überwachungseinheit zur Auswertung von von dem Zykluszeiterfassungsmittel erfassten Zykluszeiten hinsichtlich der Erfüllung wenigstens einer Maßnahmenbedingung, die das Vorliegen einer Anomalie im Fertigungsvorgang anzeigt, und
- eine Maßnahmeneinheit zur Durchführung wenigstens einer Steuermaßnahme, die einer erfüllten Maßnahmenbedingung zugeordnet ist und eine Ausgabe eines Hinweises auf das Vorliegen der entsprechenden Anomalie und/oder einen auf die Anomalie bezogenen Eingriff in den Fertigungsvorgang betrifft.

Der Betrieb der Fertigungsanlage während des Fertigungsvorgangs wird durch Betriebsparameter beschrieben, wobei üblicherweise feste und einstellbare Betriebsparameter vorliegen. Mit dem Attribut "einstellbar" für Betriebsparameter ist vorliegend gemeint, dass der Wert des Betriebsparameters während des Herstellungsprozesses eines bestimmten, durch Vorgabeparameter beschreibbaren Fertigungsprodukts, also eines Endlos-Gürtelbandes oder Endlos-Karkassenbandes, veränderbar ist. Insbesondere handelt es sich dabei um solche Betriebsparameter, die innerhalb eines sogenannten Rezepts einstellbar sind. Ein Rezept umfasst grundsätzlich von der konkreten Fertigungsanlage unabhängige Betriebsparameter, die wenigstens das Fertigungsprodukt beschreiben (also die Vorgabeparameter umfassen) und optional zusätzlich Herstellungsbedingungen beschreiben können, beispielsweise eine gewünschte Ausbringung. Typische Vorgabeparameter können beispielsweise eine Breite des Fertigungsprodukts, eine generelle Materialangabe und/oder einen Schnittwinkel der Schere (Schneideinrichtung) umfassen. Ein Teil der Betriebsparameter eines Rezepts können auch als eine Rezept-ID zusammengefasst sein.

Betriebsparameter, die das Rezept definieren bzw. bei Veränderung dieses verändern würden, können während des Fertigungsvorgangs für das Fertigungsprodukt, also während der Umsetzung des Rezepts, nicht geändert werden. Die Betriebsparameter des Rezepts werden, beispielsweise in einem Rezeptdatensatz, zu Beginn des Fertigungsvorgangs bereitgestellt, beispielsweise von einem Datenträger und/oder Server geladen und/oder eingegeben. Die Betriebsparameter eines Rezepts bzw. allgemein während eines Fertigungsvorgangs unveränderbare Betriebsparameter können als (Teil der) Fertigungsbedingungen verstanden werden bzw. solche beschreiben.

Ein einstellbarer Betriebsparameter muss nicht unmittelbar ein (beispielsweise in Steuersignale umzusetzender) Steuerparameter sein. Vielmehr sind auch abstraktere einstellbare Betriebsparameter denkbar, aus denen die Steuereinrichtung wenigstens einen, ggf. auch mehrere, Steuerparameter ableitet. Insbesondere kann der abstraktere einstellbare Betriebsparameter für die Bedienperson intuitiver verständlich sein, beispielsweise eine Korrektur angeben, die durch einen oder mehrere Steuerparameter dann konkret erreicht wird.

Erfindungsgemäß wird vorgeschlagen, eine Überwachung von Fertigungsvorgängen mittels Zykluszeiten vorzunehmen, die mittels wenigstens eines Zykluszeiterfassungsmittels erfasst werden. Das Zykluszeiterfassungsmittel kann insbesondere einen Teil der Steuereinrichtung bilden und beispielsweise zwischen Steuereinheiten und/oder Funktionseinheiten der Steuereinrichtung, ausgetauschte Steuersignale auswerten. Besonders bevorzugt ist die Steuereinrichtung als zentrale Steuereinrichtung zur Steuerung der gesamten Fertigungsanlage ausgestaltet, also als eine übergeordnete Steuerinstanz.

Besonders bevorzugt bezieht sich die Überwachung auch auf mehrere oder sogar alle Fertigungskomponenten.

Mittels Steuersignalen werden also Zykluszeiten erfasst, bevorzugt mit einer Genauigkeit im Millisekundenbereich, beispielsweise mit einer Genauigkeit von wenigstens 10 bis 1 ms. Durch Auswertung der Zykluszeiten in Maßnahmenbedingungen, welche mit besonderem Vorteil Bezug auf bekannte Werte aus vorherigen und/oder optimierten Fertigungsvorgängen nehmen, insbesondere mit diesen vergleichen, können Abweichungen bzw. Anomalien im aktuellen Fertigungsvorgang, wie Untersuchungen im Rahmen der vorliegenden Erfindung gezeigt haben, besonders robust, genau und frühzeitig detektiert werden. Diese Art der Überwachung anhand der Zykluszeiten kann auch als eine Selbstdiagnose der Fertigungsanlage verstanden werden. Abweichungen bzw. Anomalien werden frühzeitig erkannt und können dem Benutzer, beispielsweise einem Operator, anhand der Steuermaßnahmen zur Kenntnis gebracht werden und/oder anhand der Steuermaßnahmen, insbesondere korrigierend, entschärft werden, sei es durch Kompensation der Abweichungen, Schutz von Fertigungskomponenten oder ihren Einzelschrittkomponenten (beispielsweise durch vorzeitige Beendigung des Fertigungsvorgangs) und dergleichen. Hinweise auf das Vorliegen der entsprechenden Anomalie, insbesondere Warnhinweise, können beispielsweise an Ausgabemitteln der Bedieneinrichtung ausgegeben werden, beispielsweise durch Aktivierung einer Signalleuchte und/oder Warnhinweise in einer Benutzerschnittstelle zur Steuerung.

Die Zykluszeiten werden bevorzugt zumindest im Wesentlichen in Echtzeit, also mit ihrem Vorliegen, durch die Maßnahmenbedingung(en) ausgewertet, sodass eine Entscheidung über eine durchzuführende Steuermaßnahme zeitnah getroffen werden kann.

Wenigstens eine der wenigstens einen Maßnahmenbedingung kann auch eine trainierte Auswertungsfunktion der künstlichen Intelligenz verwenden, insbesondere bei der Beurteilung komplexerer Fragestellungen. Hierbei können grundsätzlich bekannte Techniken des Maschinenlernens eingesetzt werden.

Es wurde mithin, allgemein gesprochen, erkannt, dass bei der Herstellung von Gürtel- und Karkassenbändern besonders viele Einzelschrittkomponenten der Fertigungskomponenten sowie die Fertigungskomponenten untereinander abgestimmt je nach Rezept auf unterschiedlichste Art und Weise hochgenau zusammenwirken, wobei Zykluszeiten, insbesondere hinsichtlich der Einzelschritte (Teilschritte), worauf noch genauer eingegangen wird, sensibel auf Abweichungen reagieren und diese somit hochgenau und verlässlich anzeigen können. Insbesondere ist auf diese Weise sogar eine Lokalisierung der Abweichung möglich.

In einer zweckmäßigen Weiterbildung kann vorgesehen sein, dass wenigstens ein weiteres Erfassungsmittel zur Erfassung wenigstens eines weiteren, den Betrieb der Fertigungsanlage beschreibenden Fertigungswertes vorgesehen ist, wobei wenigstens eine der wenigstens einen Maßnahmenbedingung wenigstens einen des wenigstens einen Fertigungswertes zusätzlich auswertet. Beispielsweise kann wenigstens einer des wenigstens einen weiteren Fertigungswerts eine Bewegung und/oder eine Position des verarbeiteten Materials und/oder das verarbeitete Material selbst und/oder wenigstens eine Verarbeitungsbedingung, insbesondere eine Temperatur, betreffen. Erfassungsmittel können beispielsweise wenigstens einen Sensor umfassen, aber auch steuereinrichtungsintern Informationen abfragen. Wenigstens einer des wenigstens einen Fertigungswertes kann auch ein Betriebsparameter, beispielsweise ein Vorgabeparameter eines aktuellen Rezepts und/oder ein einstellbarer Betriebsparameter sein.

Es ist mithin denkbar, auch sonstige Fertigungswerte der Fertigungsanlage zusätzlich mit in den Überwachungsprozess einzubeziehen. Während grundsätzlich Maßnahmenbedingungen (zusätzlich) denkbar sind, die lediglich wenigstens einen Fertigungswert betreffen und der Überwachung dienen, kann es auch zweckmäßig sein, wenigstens einen Fertigungswert und wenigstens eine Zykluszeit gemeinsam durch eine Maßnahmenbedingung auszuwerten. Ist beispielsweise bekannt, dass für manche Materialien der Schneidprozess länger dauert, kann dies bei der Auswertung der Maßnahmenbedingung über einen bestimmten Fertigungswert abgebildet werden. Auch bekannte Temperaturabhängigkeiten können beispielsweise in Maßnahmenbedingungen abgebildet werden, wenn zusätzlich ein entsprechender Fertigungswert mit eingeht. So erlauben Fertigungswerte eine noch genauere Analyse.

Mit besonderem Vorteil kann in diesem Kontext vorgesehen sein, dass die Erfassung der wenigstens einen Zykluszeit und die wenigstens eine Maßnahmenbedingung auf einen ein Rezept bildenden Satz von für den Fertigungsvorgang festgelegten Betriebsparametern der Fertigungsanlage bezogen sind. Mit anderen Worten kann die Überwachung rezeptspezifisch erfolgen, sodass insbesondere Maßnahmenbedingungen auf Fertigungsvorgänge gemäß einem bestimmten Rezept bezogen sein können. Diese Berücksichtigung von Beschreibungen eines aktuellen Fertigungsvorgangs erlaubt eine nochmals deutlich genauere und robustere Detektion von Abweichungen, also Anomalien, im Fertigungsvorgang. Beispielsweise kann die Steuereinrichtung eine Datenbank aufweisen, in der jedem Rezept zugeordnet abgelegt werden kann, welche Zykluszeiten zu erfassen sind und/oder welche Maßnahmenbedingungen zu verwenden sind und/oder wie diese zu parametrieren sind.

In zweckmäßiger Weiterbildung der vorliegenden Erfindung kann vorgesehen sein, dass das Zykluszeiterfassungsmittel eingerichtet ist, zur Erfassung der Zykluszeit zwei aufeinanderfolgende Steuersignale, insbesondere Bereitschafts- und/oder Triggersignale, der wenigstens einen Einzelschrittkomponente und/oder der Fertigungskomponente abzufragen, und/oder wenigstens eine der wenigstens einen Zykluszeit als Dauer wenigstens eines der Einzelschritte zu ermitteln. Letzteres bedeutet insbesondere, dass das Zykluszeiterfassungsmittel eingerichtet ist, wenigstens eine Zykluszeit als Zeitraum zwischen zwei aufeinanderfolgenden, wenigstens einen Einzelschritt begrenzenden, unterschiedlichen Steuersignalen, insbesondere Bereitschafts- und/oder Triggersignalen, während eines Einwirkungszyklus zu ermitteln. Es wird mithin vorgeschlagen, für wenigstens einen Teil zu ermittelnder Zykluszeiten ohnehin in der Steuereinrichtung genutzte Bereitschafts- und/oder Triggersignale zu verwenden. Das bedeutet, insoweit kann wenigstens eines des wenigstens einen Zykluszeiterfassungsmittels beispielsweise als Erfassungseinheit der Steuereinrichtung dazu ausgebildet sein, innerhalb der Steuereinrichtung ausgetauschte Steuersignale, insbesondere Bereitschafts- und/oder Triggersignale, zu überwachen und bei Auftreten eines zu protokollierenden Steuersignals den entsprechenden Zeitpunkt zu erfassen, insbesondere zu protokollieren. Durch die Differenz zweier solcher aufeinanderfolgender Zeitpunkte ergibt sich dann eine Zykluszeit, insbesondere als Dauer eines Einzelschritts. Mit anderen Worten und allgemeiner formuliert kann vorgesehen sein, dass Zyklen der Fertigungsanlage, also Standard-Abläufe, als Zeitabschnitte mit einer bei Vorliegen eines Steuersignals protokollierten Startzeit und einer bei Vorliegen eines weiteren Steuersignals protokollierten Endzeit definiert werden. Diese Zeitabschnitte, also Gesamtzyklus-Zykluszeiten, werden dann noch weiter in Einzelschritte unterteilt, die ebenso, bevorzugt ausschließlich, durch das Vorliegen von Steuersignalen definierte, zu protokollierende Startzeiten und Endzeiten aufweisen. Die so erfassten Zykluszeiten werden dann in einer übergeordneten Steuerung ausgewertet. Hierbei kann mit besonderem Vorteil auch die Summe aller Einzelschritt-Zykluszeiten eines Zyklus als eine Gesamtzyklus-Zykluszeit bereitgestellt werden, worauf im Folgenden noch genauer eingegangen werden wird. Durch die Aufteilung in Einzelschritte und das Erfassen, insbesondere Loggen (Protokollieren), von Zykluszeiten für die Einzelschritte wird eine genauere Analyse ermöglicht, wo die Anomalie vorliegt. Zweckmäßigerweise werden die Einzelschritte so definiert, dass sich Abweichungen von einer erwarteten Zykluszeit, insbesondere für ein Rezept, bestimmten Anomalien im Rahmen der Auswertung bereits zuordnen lassen. Wird beispielsweise ein Einzelschritt definiert, in dem das zu verarbeitende Material magnetisch durch Wechselwirkung mit einem magnetischen, unterhalb des Materials angeordneten Element angehoben werden soll, können typische Abweichungen durch Verrutschen des unterhalb des Materials angeordneten Elements auftreten, wenn also beispielsweise die Magnetkraft nicht unmittelbar "greift". Förderstrecken können gegebenenfalls bei längerer Dauer einem schlechten Griff der fördernden Einzelschrittkomponente und/oder zurückrutschendem Material zugeordnet werden und dergleichen. Dabei sei an dieser Stelle noch darauf hingewiesen, dass Einzelschrittkomponenten nicht zwangsläufig einem einzigen Einzelschritt zugeordnet sein können, sondern es durchaus denkbar ist, dass eine Einzelschrittkomponente mehrere Einzelschritte durchführt und/oder an mehreren Einzelschritten beteiligt ist. Ein Beispiel hierfür ist eine Hebevorrichtung einer Schneideinrichtung bzw. Schere und/oder eines Rückzugssystems, welche beispielsweise sowohl als Hochhalter als auch als Niederhalter in verschiedenen Einzelschritten verwendet werden kann. Ferner sei noch allgemein angemerkt, dass an einem Zyklus einer Fertigungskomponente in manchen Fällen auch Einzelschrittkomponenten anderer Fertigungskomponenten mitwirken können und/oder Steuersignale liefern oder entgegennehmen können. Mithin müssen die Steuersignale nicht zwangsläufig von der zu überwachenden Fertigungskomponente stammen und/oder an diese gerichtet sein.

Vorzugsweise kann mithin bei wenigstens einer auf wenigstens einen Einzelschritt bezogenen Zykluszeit die Überwachungseinheit zur Zuordnung einer Anomalie zu wenigstens einem Einzelschritt eingerichtet sein und/oder wenigstens eine Maßnahmenbedingung zur Anzeige einer wenigstens einem Einzelschritt zuzuordnenden Anomalie bei Erfüllung formuliert sein. Hierbei können jedoch durchaus komplexere Auswertungen und/oder Maßnahmenbedingungen verwendet werden, die beispielsweise auch andere Einzelschritte ihres Zyklus (und/oder eines benachbarten Zyklus) und deren Zykluszeiten berücksichtigen können, da Anomalien in bestimmten Einzelschritten auch Auswirkungen auf die Zykluszeiten anderer Einzelschritte haben können. Maßnahmenbedingungen können wenigstens teilweise gezielt so formuliert werden, dass sie auf die Detektion von Anomalien in bestimmten Einzelschritten und/oder Einzelschrittkomponenten gerichtet sind.

Denkbar ist hierbei mit besonderem Vorteil auch eine Hierarchie der Auswertungsvorgänge und/oder Maßnahmenbedingungen, wobei sich die übergeordneten Auswertungsvorgänge und/oder Maßnahmenbedingungen auf die Gesamtzyklus-Zykluszeit beziehen. So kann beispielsweise vorgesehen sein, dass zunächst eine auf die Gesamtzyklus-Zykluszeit bezogene Maßnahmenbedingung ausgewertet wird, die bei Erfüllung das Vorliegen einer Anomalie anzeigt, wobei bei Erfüllung der Maßnahmenbedingung auf Einzelschritt-Zykluszeiten bezogene untergeordnete Maßnahmenbedingungen ausgewertet werden, um die Anomalie in wenigstens einem Einzelschritt und/oder einer Einzelschrittkomponente - falls möglich - zu lokalisieren. Dabei sei darauf hingewiesen, dass diese Hierarchie auch weiter fortgeführt sein kann, beispielsweise für mehrere aufeinanderfolgende Zyklen, beispielsweise ganze Fertigungskomponenten oder Gruppen von Fertigungskomponenten, Gesamtzeiten ermittelt werden können und ausgewertet werden können. Beispielsweise ist auch eine Gesamtzeit über alle Fertigungskomponenten denkbar und erfassbar, wobei bei einer Anomalie in dieser dann in der Hierarchie schrittweise zu untergeordneten Gesamtzeiten, insbesondere Gesamtzyklus-Zykluszeiten, und sodann zu Einzelschritt-Zykluszeiten übergegangen werden kann.

Beispielhafte Ausführungsformen können vorsehen, dass wenigstens eines des wenigstens einen Bereitschafts- und/oder Triggersignals ein Abschlusssignal von wenigstens einer unterstützenden Einzelschrittkomponente, insbesondere einem Hochhalter und/oder einem Niederhalter und/oder einer Anhebeeinrichtung und/oder einer Positioniereinrichtung, an eine materialfördernde und/oder materialbearbeitende Einzelschrittkomponente, insbesondere ein Förderband und/oder eine Greifeinrichtung und/oder ein Schneidmittel und/oder ein Verbindemittel und/oder ein Material hinzufügendes Mittel, ist und/oder ein Startsignal für eine Einzelschrittkomponente ist. Andere Beispiele für Steuersignale, die erfasst werden können, um Zykluszeiten zu ermitteln, umfassen auch Startsignale der Steuereinrichtung und/oder einer anderen Fertigungskomponente zum grundsätzlichen Start des Zyklus.

In bevorzugter Ausgestaltung kann wenigstens eine der wenigstens einen Maßnahmenbedingung eine Grenzwertbedingung sein, die wenigstens eine der wenigstens einen Zykluszeit mit einem zugeordneten oberen Grenzwert und/oder einem zugeordneten unteren Grenzwert vergleicht. Bei dem oberen Grenzwert ist zur Erfüllung der Maßnahmenbedingung eine Überschreitung, bei dem unteren Grenzwert eine Unterschreitung nötig. Hierbei wird mithin überprüft, ob die Zykluszeit innerhalb wenigstens einer erwarteten Grenze liegt. Dabei sind unterschiedliche Herangehensweisen denkbar, um zu den Grenzwerten zu gelangen.

So kann in einer ersten Ausgestaltungsvariante der vorliegenden Erfindung vorgesehen sein, dass wenigstens einer des wenigstens einen Grenzwerts, insbesondere für zumindest ein Rezept, fest vorgegeben ist. In diesem Fall wird also ein Vergleich mit fest hinterlegten Grenzwerten vorgenommen, um Anomalien anzuzeigen. Solche Grenzwerte können beispielsweise anhand von theoretisch beim Entwurf der Fertigungsanlage, insbesondere für das jeweilige Rezept, und/oder bei, insbesondere herstellerseitigen, Testläufen angesetzte oder ermittelte Grenzen sein. Derartige Intervalle, in denen sich die Zykluszeit bewegen soll, sind meist etwas breiter gewählt, da auf lokale und/oder aktuelle Besonderheiten keine Rücksicht genommen werden kann. Sie eignen sich mithin besonders, wenn an der konkreten Fertigungsanlage, beispielsweise für das spezielle Rezept, noch keine Erfahrungswerte vorliegen.

In einer zweiten Ausgestaltungsvariante kann zusätzlich oder alternativ vorgesehen sein, dass die Überwachungseinrichtung eine Ermittlungseinheit zur Ermittlung wenigstens eines gelernten des wenigstens einen Grenzwerts in einer Lernphase des aktuellen und/oder eines zumindest rezeptgleichen Referenz-Fertigungsvorgangs aufweist. Es kann mithin vorgesehen sein, dass der wenigstens eine Grenzwert bei wenigstens einem Fertigungsvorgang an derselben Fertigungsanlage ermittelt, mithin sozusagen angelernt, wird. Konkret kann vorgesehen sein, dass die Lernphase für wenigstens einen gelernten Grenzwert ein gleitendes, mit dem aktuellen Zeitpunkt oder in einem vorgegebenen zeitlichen Abstand vor dem aktuellen Zeitpunkt endendes Zeitfenster ist und/oder die Lernphase für wenigstens einen gelernten Grenzwert ein, insbesondere nach einer Einlaufphase beginnender, Zeitabschnitt zu Beginn des aktuellen Fertigungsvorgangs oder des Referenz-Fertigungsvorgangs und/oder ein, zumindest nach der Einlaufphase, kompletter Referenz-Fertigungsvorgang, insbesondere der erste eines Rezeptes, ist. Beispielsweise kann also beim ersten Durchlauf eines Fertigungsvorgangs für ein Rezept, wenn noch kein oder nur der oben genannte fest vorgegebene Grenzwert vorhanden ist, überwacht werden, in welchem Rahmen sich Zykluszeiten bei einem normal ablaufenden Fertigungsvorgang bewegen. Dabei wird grundsätzlich bevorzugt eine Einlaufphase abgewartet, beispielsweise eine bestimmte Zyklenzahl, insbesondere 5 bis 30, in der, insbesondere durch einen Benutzer überwacht, die Fertigungsanlage durchgängig laufen muss, ehe der stabile, normale Fertigungszustand erreicht ist und zum Anlernen von Grenzwerten genutzt werden kann. Eine solche Einlaufphase kann grundsätzlich auch vor Beginn der Überwachung angesetzt werden. Zweckmäßigerweise können die Grenzwerte jedoch immer weiter aktualisiert werden, so lange die Fertigungsanlage stabil läuft. Auf diese Weise können auch, beispielsweise benutzerseitig herbeigeführte, Verbesserungen, Nachjustierungen und dergleichen berücksichtigt werden. Nichtsdestotrotz sollte dann zweckmäßigerweise ein gewisser zeitlicher Abstand zu dem aktuellen Zeitpunkt eingehalten werden, da sich manche Anomalien langsam ausbilden können und daher ggf. "mitgelernt" werden könnten, was durch den zeitlichen Abstand vermieden werden kann. Beispielsweise kann die Lernphase immer bis zum Ende des letzten erfolgreich abgeschlossenen Fertigungsvorgangs zurückreichen. Mit besonderem Vorteil werden auch in der Lernphase die Zykluszeiten zweckmäßig gemeinsam mit wenigstens einem, insbesondere dem wenigstens einen, weiteren Fertigungswert erfasst, um sie in Zusammenhang mit den Fertigungsbedingungen und sonstigen Umständen setzen zu können. Anders gesprochen werden die Zykluszeiten bevorzugt, insbesondere auch während der Überwachung, in Verbindung mit allen Bewegungen und Sensorabfragen an der Fertigungsanlage erfasst. So können, insbesondere, wenn die Maßnahmenbedingungen auch Fertigungswerte abfragen, nochmals verbesserte und genauere Auswertungen vorgenommen werden. Doch auch allgemein wird bereits durch Lernen aus vorangehenden Fertigungsabschnitten, insbesondere desselben Rezepts, eine deutliche Verbesserung der Überwachung erzielt, da konkret auf den Normalzustand an einer bestimmten Fertigungsanlage abgestellt werden kann.

Während einer Lernphase kann durchaus auch eine Überwachung vorgesehen sein, das bedeutet, während der wenigstens eine gelernte Grenzwert ermittelt wird, können beispielsweise aktuell erfasste Zykluszeiten auch hinsichtlich der vorgegebenen Grenzwerte gemäß der ersten Ausgestaltungsvariante und/oder anderweitig bereitgestellter Maßnahmenbedingungen überwacht werden. Beispielsweise ist es denkbar, bei einem neuen Rezept, für das der wenigstens eine Grenzwert angelernt werden soll, Maßnahmenbedingungen eines ähnlichen Rezepts, insbesondere des ähnlichsten Rezepts, wofür eine Vergleichshierarchie definiert werden kann, heranzuziehen. Unterscheidet sich beispielsweise die gewünschte Breite des herzustellenden Endlosbandes lediglich marginal von der des aktuellen Rezepts, kann eine hohe Ähnlichkeit angenommen werden. Maßnahmenbedingungen ähnlicher Rezepte können gegebenenfalls modifiziert werden, beispielsweise in Abhängigkeit eines Ähnlichkeitsmaßes mit abnehmender Ähnlichkeit abgeschwächt werden. Es versteht sich, dass dann, wenn, beispielsweise aufgrund der Verwendung eines gleitenden Zeitfensters, eine Aktualisierung von Grenzwerten stattfindet, selbstverständlich grundsätzlich die bisherigen Grenzwerte zur Überwachung eingesetzt werden.

Es sei noch angemerkt, dass es grundsätzlich vorteilhaft ist, einen Verlauf der Zykluszeiten über ein Auswertungszeitfenster zu analysieren. Beispielsweise kann eine Drift von Zykluszeiten über die Zeit auch auf eine Anomalie hinweisen. Ein Trend, der sich über ein Auswertungszeitfenster ergibt, kann einen zunehmenden Verschleiß oder dergleichen andeuten. Entsprechend können Maßnahmenbedingungen und ggf. weitere Auswertungsvorgänge ausgestaltet sein, nicht nur den aktuellen Wert der Zykluszeit auszuwerten, sondern den Verlauf über ein Auswertungszeitfenster, welches auch von Maßnahmenbedingung zu Maßnahmenbedingung unterschiedlich sein kann.

Allgemein gesprochen können die aufgezeichneten Zykluszeiten auch über die Detektion von aktuell vorliegenden Anomalien hinaus nützlich ausgewertet werden. So kann eine bevorzugte Ausgestaltung der vorliegenden Erfindung vorsehen, dass die Überwachungseinrichtung ferner eine Auswertungseinheit aufweist, die zur Auswertung von über zumindest einen Zeitraum in einem Speichermittel der Überwachungseinrichtung gespeicherten, erfassten Zykluszeiten, insbesondere deren Verlauf, zur Ermittlung optimierter Betriebsparameter der Fertigungsanlage und/oder zur Terminierung einer vorausschauenden Wartung eingerichtet ist. Das bedeutet, die Auswertung der Zykluszeiten, insbesondere gemeinsam mit wenigstens einem Fertigungswert, kann auch dazu genutzt werden, den Fertigungsvorgang zu verbessern, insbesondere zu optimieren, nachdem Zykluszeiten neben Anomalien auch Verbesserungspotenzial beschreiben können. Zudem können die Zykluszeiten, insbesondere Trends in ihrem zeitlichen Verlauf, auch dahingehend ausgewertet werden, wann in der Zukunft eine Wartung zweckmäßig sein könnte, die dann frühzeitig angesetzt werden kann, ohne dass es gegebenenfalls zu einem (nicht geplanten) Ausfall der Fertigungsanlage kommt. Insgesamt werden die Zykluszeiten auf diese Weise auch weiteren Zwecken zugeführt, mithin mehrfach vorteilbringend genutzt. Beispielsweise können in der Auswertungseinheit, vergleichbar mit den Maßnahmenbedingungen für Anomalien, Optimierungsbedingungen und/oder Wartungsbedingungen verwendet werden, denen entsprechende Optimierungs- und/oder Ausgabemaßnahmen zur Anpassung von (einstellbaren) Betriebsparametern und/oder zum Hinweis auf eine zu terminierende Wartung zugeordnet sein können.

In einer Weiterbildung kann die Fertigungsanlage ferner eine Anzeigeeinrichtung, insbesondere als Teil der Bedieneinrichtung, umfassen und die Steuereinrichtung zur wenigstens teilweisen Ausgabe der wenigstens einen Zykluszeit und/oder einer daraus abgeleiteten Information an der Anzeigeeinrichtung eingerichtet sein, insbesondere innerhalb einer Benutzeroberfläche zur Bedienung und Überwachung der Fertigungsanlage. Konkret kann beispielsweise vorgesehen sein, dass die Ausgabe eine Anzeige der aktuellen Zykluszeit mit wenigstens einem Vergleichswert, insbesondere dem oberen und/oder dem unteren Grenzwert, umfasst. Ferner kann die Anzeige auch einen Verlauf der Zykluszeiten, insbesondere auch über mehrere Fertigungsvorgänge als jeweiliger Mittelwert, umfassen. Auf diese Weise kann auch ein Benutzer die Zykluszeiten beobachten, überwachen und Schlussfolgerungen ziehen, die gegebenenfalls nicht oder noch nicht durch Maßnahmenbedingungen und/oder die weitere Auswertung, beispielsweise zur Optimierung, abgedeckt sind. Zudem erhält er ständig einen Überblick über die Fertigungsanlage und inwieweit der Fertigungsvorgang innerhalb normaler Parameter verläuft.

Wie für gattungsgemäße Fertigungsanlagen für Gürtelband und/oder Karkassenband grundsätzlich bekannt, kann auch die erfindungsgemäße Fertigungsanlage bevorzugt vorsehen, dass die Fertigungskomponenten
- eine Abwickelstation für ein Ausgangsband, insbesondere ein Cordband,
- eine Schere zum Abschneiden von Bandabschnitten in einem vorgegebenen Winkel und einer vorgegebenen Breite von dem Ausgangsband von der Abwickelstation,
- eine Rückzugeinrichtung zum Fördern des Ausgangsbandes durch die Schere,
- eine Spleißeinrichtung, insbesondere einen Stumpfspleißer oder einen Überlappspleißer, zum Verbinden der durch die Schere geschnittenen Bandabschnitte,
- wenigstens eine Aufwickelstation für das Gürtel- und/oder Karkassenband, und
- wenigstens eine Fördereinrichtung
umfassen.

Ein Scherentisch der Schere kann als Materialunterstützung dienen, die auch anderweitig bereitgestellt werden kann. Darüber hinaus kann die Fertigungsanlage wenigstens eine optionale Fertigungskomponente, beispielsweise eine Beruhigungsrolle und/oder ein Reparaturband umfassen. Weitere optionale Fertigungskomponenten können einen Slitter und/oder wenigstens eine Belegevorrichtung umfassen.

Als besonders vorteilhaft hat es sich erwiesen, wenn wenigstens die Rückzugeinrichtung und/oder die Schere (Schneideinrichtung) eine zu überwachende Fertigungskomponente ist. Denn bei der Rückzugeinrichtung und/oder der Schere, insbesondere in deren Zusammenspiel, folgen eine Vielzahl von Einzelschritten aufeinander, die jeweils Bereitschaften bzw. sonstige Triggersignale benötigen und an vielerlei Stellen auf konkrete Anomalien hinweisen können, wenn die Einzelschritte des Zyklus, den die Rückzugeinrichtung und/oder die Schere durchläuft, allesamt durch Zykluszeiten entsprechend überwacht werden. Dabei wird beispielsweise zunächst mit einem Startsignal begonnen, das anzeigt, dass das Material für eine vorbestimmte Länge (die dem Rezept-Vorgabeparameter Materialbreite entsprechen kann) durch die Schere zu ziehen ist. Bevor dies allerdings erfolgen kann, sind noch weitere Einzelschritte erforderlich. So kann als nächstes auf ein Bereitschaftssignal von der Abwickelstation gewartet werden, welches anzeigt, dass hinreichend Material in einer Schlaufe vorbereitet ist, um gezogen zu werden. Ein nächster Einzelschritt kann nun durch den Endzeitpunkt definiert werden, dass ein Niederhalter signalisiert, dass dieser in Position ist, mithin sich das Material in Übergabeposition befindet. Weitere Einzelschritte können sich auf die Bereitschaft, also abgeschlossene Positionierung, einer Hebevorrichtung und eines Hochhalters beziehen. Nach der Positionierung der Hebevorrichtung kann eine Zange das Material greifen, was in Ausführungsbeispielen ebenso abgefragt werden kann. Optional kann danach in einem weiteren Einzelschritt die Positionierung einer Aufnahmeeinrichtung zur Weiterförderung des abgeschnittenen Materials zur Spleißeinrichtung erfolgen und das entsprechende Abschlusssignal abgewartet werden. Als letzter Einzelschritt kann dann die Zange das Material tatsächlich um die vorbestimmte Länge durch die Schere ziehen, woraufhin ein Bereitschaftssignal zum Schneiden an die Schere gegeben werden kann. Sodann fährt die Zange, nachdem mit dem Abtransport des abgeschnittenen Materialabschnitts begonnen wurde, wieder nach vorne zur Schere, um dann auf neues zu greifendes Material im nächsten Zyklus zu warten. Alle diese Steuersignale, die Trigger, einen Abschluss bzw. eine Bereitschaft und dergleichen anzeigen, können nun durch das Zykluszeiterfassungsmittel, beispielsweise eine Erfassungseinheit der Steuereinrichtung, erfasst werden, wobei der entsprechende Zeitstempel, welcher eine Startzeit bzw. Endzeit eines Einzelschritte beschreibt, protokolliert wird (Zeitstempel). Anhand der Differenzen ergeben sich die Zykluszeiten, wobei sich die Gesamtzyklus-Zykluszeit auch als Differenz der ersten Startzeit bis zur letzten Endzeit ergibt. Mithin kann ein Zyklus für den Rückzug, insbesondere also die Rückzugeinrichtung und/oder die Gruppe aus Rückzugeinrichtung und Schere, den Teilfertigungsvorgang des Greifens und Zurückziehens des Materials für einen abzuschneidenden Materialabschnitt durch die Schere betreffen. Beispielhafte Anomalien, die durch diese Zykluszeiten, gegebenenfalls gemeinsam mit wenigstens einem Fertigungswert, anhand von Maßnahmenbedingungen detektiert werden können, umfassen
- inkorrekter Messerschnitt der Schere
- Verschleiß der Achsen der Rückzugeinrichtung und/oder Schere
- notwendige Korrektur zur Einstellung der Zange
- Materialzuführung nicht korrekt
- Niederhaltesystem-Fehler
- falsche Abschnittsbreite
- Material rutscht zurück
- Verschleiß am Zangensegment
- Benutzereingabefehler bei Betriebsparametern wie Achsenparameter der Rückzugeinrichtung und/oder Schere und/oder Geschwindigkeiten der Rückzugeinrichtung und/oder Schere.

Selbstverständlich sind auch weitere Möglichkeiten denkbar. Die dem Verschleiß betreffenden Erkenntnisse können auch in der Auswertungseinheit hinsichtlich einer Wartung bearbeitet und/oder gewonnen werden, beispielsweise durch die Wartungsbedingung.

Die Zykluszeiten-Analyse ist nicht auf die Rückzugeinrichtung und/oder die Schere beschränkt. Beispielsweise ist es besonders vorteilhaft, wenn parallel zur Rückzugeinrichtung (und/oder der Schere) auch (weitere) Zykluszeiten der Schere erfasst werden, wobei wenigstens eine Maßnahmenbedingung jeweils wenigstens eine Zykluszeit der Rückzugeinrichtung und der Schere gemeinsam ausgewertet, um eine bestimmte Anomalie festzustellen und/oder wenigstens eine Zykluszeit der Schere anhand wenigstens eines auch zur Ermittlung einer Zykluszeit der Rückzugeinrichtung verwendeten Steuersignals ermittelt wird. Für die Schere können einige Steuersignale, die hinsichtlich der Rückzugeinrichtung zur Definition von Einzelschritten und zugehörigen Zykluszeiten herangezogen worden, ebenso verwendet werden. Auch bei der Spleißeinrichtung können verschiedene Zykluszeiten geloggt werden, beispielsweise die Ankunft des Materials, das Absenken des eigentlichen Spleißkopfes und dergleichen. Es sei noch angemerkt, dass, auch wenn der Zyklus insgesamt eine Einwirkung auf das Material, also Band, betrifft, nicht jeder Einzelschritt unmittelbar auf das Material einwirken muss.

Es sei angemerkt, dass im Rahmen der Erfindung auch ein Zusammenspiel mit Regelungsmechanismen vorgesehen sein kann, beispielsweise soweit die Kompensation von Regelabweichungen Einfluss auf erwartete Zykluszeiten haben kann. So kann beispielsweise vorgesehen sein, dass wenigstens eine der wenigstens einen Maßnahmenbedingung in Abhängigkeit einer Regelungsabweichung wenigstens eines Regelkreises der Fertigungsanlage angepasst wird. Die Art der Anpassung, beispielsweise des oberen und des unteren Grenzwerts, kann beispielsweise empirisch festgestellt werden, indem beispielsweise in der Lernphase die Zykluszeiten bei Regelabweichungen diesen zugeordnet erfasst und ausgewertet werden.

Neben der Fertigungsanlage betrifft die vorliegende Erfindung auch ein computerimplementiertes Verfahren zur Überwachung des Betriebs einer Fertigungsanlage für Gürtel- und/oder Karkassenband in der Reifenindustrie, wobei die Fertigungsanlage mehrere materialbearbeitende und/oder materialfördernde, in Abhängigkeit von Betriebsparametern ansteuerbare Fertigungskomponenten, eine Steuereinrichtung zur Ansteuerung der Fertigungskomponenten und eine Bedieneinrichtung aufweist, wobei die Steuereinrichtung eine Überwachungseinrichtung zur Überwachung des Betriebs wenigstens einer zu überwachenden der Fertigungskomponenten aufweist, welche wenigstens eine Einzelschrittkomponente zur Ausführung von Einzelschritten eines Zyklus zur Einwirkung auf das Material umfasst. Erfindungsgemäß weist das Verfahren folgende Schritte während eines Fertigungsvorgangs auf:
- Erfassung einer Zykluszeit des Zyklus an der wenigstens einen zu überwachenden Fertigungskomponente durch wenigstens ein Zykluszeiterfassungsmittel,
- Auswertung von von dem Zykluszeiterfassungsmittel erfassten Zykluszeiten hinsichtlich der Erfüllung wenigstens einer Maßnahmenbedingung, die das Vorliegen einer Anomalie im Fertigungsvorgang anzeigt, und
- Durchführung wenigstens einer Steuermaßnahme, die einer erfüllten Maßnahmenbedingung zugeordnet ist und eine Ausgabe eines Hinweises auf das Vorliegen der entsprechenden Anomalie und/oder einen auf die Anomalie bezogenen Eingriff in den Fertigungsvorgang betrifft.

Sämtliche Ausführungen bezüglich der erfindungsgemäßen Fertigungsanlage lassen sich analog auf das erfindungsgemäße Verfahren übertragen und umgekehrt, sodass auch mit dem Verfahren die bereits genannten Vorteile erhalten werden können.

Ein erfindungsgemäßes Computerprogramm ist direkt in ein Speichermittel einer Steuereinrichtung einer Fertigungsanlage für Gürtel- und/oder Karkassenband ladbar und weist Programmmittel derart auf, dass bei Ausführen des Computerprogramms auf der Steuereinrichtung diese veranlasst wird, die Schritte eines erfindungsgemäßen Verfahrens durchzuführen. Das Computerprogramm kann auf einem erfindungsgemäßen elektronisch lesbaren Datenträger gespeichert sein, welcher mithin darauf gespeicherte Steuerinformationen umfasst, die wenigstens ein erfindungsgemäßes Computerprogramm umfassen und derart ausgestaltet sind, dass bei Verwendung des Datenträgers in einer Steuereinrichtung einer Fertigungsanlage für Gürtel- und/oder Karkassenband diese zur Durchführung eines erfindungsgemäßen Verfahrens ausgebildet wird. Bei dem Datenträger kann es sich um einen nicht-transienten Datenträger, beispielsweise eine CD-ROM, handeln.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: Fertigungskomponenten eines ersten Ausführungsbeispiels einer erfindungsgemäßen Fertigungsanlage für Karkassenband,
- Fig. 2: Fertigungskomponenten eines zweiten Ausführungsbeispiels einer erfindungsgemäßen Fertigungsanlage für Gürtelband,
- Fig. 3: Fertigungskomponenten eines dritten Ausführungsbeispiels einer erfindungsgemäßen Fertigungsanlage für Karkassenband
- Fig. 4: Fertigungskomponenten eines vierten Ausführungsbeispiels einer erfindungsgemäßen Fertigungsanlage für Gürtelband,
- Fig. 5: Steuer- und Bedienkomponenten für das erste und das zweite Ausführungsbeispiel,
- Fig. 6: einen Ablaufplan eines Ausführungsbeispiels des erfindungsgemäßen Verfahrens,
- Fig. 7: schematisch eine erste Zustandsskizze zur Erläuterung des Verfahrens,
- Fig. 8: schematisch eine zweite Zustandsskizze zur Erläuterung des Verfahrens,
- Fig. 9: schematisch eine dritte Zustandsskizze zur Erläuterung des Verfahrens,
- Fig. 10: schematisch eine vierte Zustandsskizze zur Erläuterung des Verfahrens,
- Fig. 11: schematisch eine fünfte Zustandsskizze zur Erläuterung des Verfahrens,
- Fig. 12: schematisch eine sechste Zustandsskizze zur Erläuterung des Verfahrens,
- Fig. 13: schematisch eine siebte Zustandsskizze zur Erläuterung des Verfahrens, und
- Fig. 14: eine mögliche Anzeige in der Benutzeroberfläche.

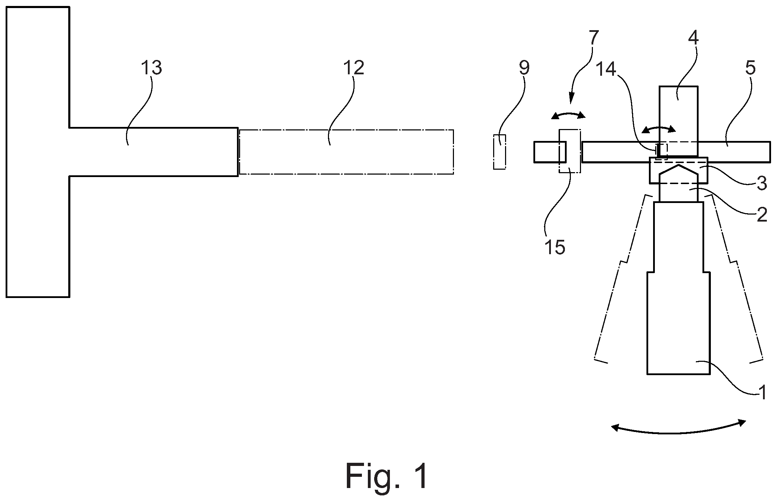

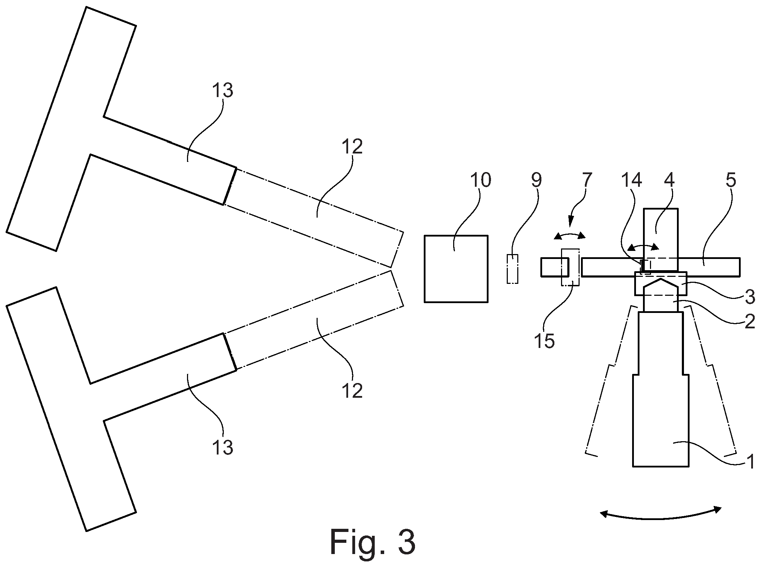

Fig. 1 und Fig. 3 zeigen beispielhaftes Layouts für eine Karkassenanlage ohne bzw. mit Slitter als erstes bzw. drittes Ausführungsbeispiel einer erfindungsgemäßen Fertigungsanlage.

Die Karkassenanlage umfasst eine Abwickelstation 1, aus der das zu bearbeitende Cordband als Ausgangsband bezogen wird. In der Abwickelstation 1 werden in ein geeignetes Gestell die zu verarbeitenden Materialrollen eingehängt und ausgewickelt. Hierbei wird die zu verarbeitende Cordbahn von einer Zwischenlage (Folie, Leinen oder Ähnliches) getrennt. Diese Zwischenlage wird verwendet, um das Verkleben der hier gummierten Materialbahn zu verhindern. Um verschiedene Schneidwinkel zu realisieren, kann wie ausgeführt die Abwickelstation 1 geschwenkt werden, was jedoch nicht zwingend erforderlich ist. Es gibt unterschiedliche Ausführungsformen hinsichtlich eines solchen Abwicklers. Bekannt sind Einfachabwickler, in die eine Materialrolle eingehängt werden kann. Bei einem Doppelabwickler mit Drehtisch sind zwei Materialrollen zum Einhängen vorgesehen, eine davon wird verarbeitet, eine davon gewechselt. Daneben ist ein Doppelabwickler mit Shuttlerahmen zum Einhängen von zwei Materialrollen bekannt, von denen eine verarbeitet, eine gewechselt wird. Weiterhin sind Kassettenabwickler bekannt, in denen eine Materialrolle in eine Kassette gehängt wird und die Kassette sodann in den Abwickler transportiert wird. Diese Aufzählung ist nicht abschließend. Die Abwickelstation 1 kann eine Materialschlaufe bilden und zum Abzug vorhalten.

Der schwenkbaren Abwickelstation 1 folgt eine Schneideinrichtung bzw. Schere 3, die zum Schneiden des von der Abwickelstation 1 kommenden Cordbands dient. Die Schere 3 dient zum Abschneiden von Cordbandstreifen in einer definierten Breite und einem definierten Winkel. Als Schere 3 können verschiedene Ausgestaltungen verwendet werden:
- Guillotine-Scheren mit feststehendem Untermesser und auf- und abfahrbarbarem Obermesser,
- Rundmesserscheren mit einem feststehenden Untermesser und einen daran entlang fahrenden Rundmesser, und
- Scheren mit einem schnell rotierenden Sägemesser (ähnlich einem Kreissägenmesser).

Je nach zu verarbeitendem Material kommen verschiedene Scherenausführungen zum Einsatz. Hierbei ist entscheidend, welches Cordmaterial (ob Textil- oder Stahlcord) und in welchem Winkel dieses geschnitten werden muss (Anlagentypen Karkasse bzw. Gürtel), wobei in diesem Beispiel eine Schere 3 für eine Karkassenanlage verwendet wird.

Die Materialunterstützung 2 ist mit der Abwickelstation 1 verbunden. Sie schwenkt im Bedarfsfall gemeinsam mit dieser. Das zu verarbeitende Material liegt auf der Materialunterstützung 2 und wird auf diesem liegend in die Schere 3 gezogen. Am Anfang der Materialunterstützung 2 oder darüber befindet sich sehr häufig eine Fördereinrichtung, die den Materialanfang in die Schere transportiert, beispielsweise eine angetriebene Förderrolle. Dies ist immer dann notwendig, wenn die Fertigungsanlage komplett entleert ist und der Anfang einer neuen Materialrolle in die Schere 3 eingelegt werden muss, oder falls zum Schwenken der Abwickelstation 1 das Material ein Stück weit aus der Schere 3 zurückgezogen wurde.

Relevant für die Scherenbauform ist insbesondere der Ablauf nach dem Schneiden. Um das geschnittene Material, also die Bandabschnitte, mit wenigen Bearbeitungsschritten in den Folgeprozess einzubinden, sind weitere Fertigungskomponenten bzw. Einzelschrittkomponenten von Fertigungskomponenten, wie beispielsweise Bänder und Hochhalter, im Einsatz. Diese weiteren Fertigungs- und/oder Einzelschrittkomponenten sollten so nah wie möglich an der der Schere 3 (welche ebenso eine Fertigungskomponente bildet) befindlich sein. Das Material sollte hierzu so wenig wie möglich bewegt werden (insbesondere im Hinblick auf eine Fallhöhe), um es in geschnittener Ablageposition weiter zu verarbeiten.

Um das Material durch die Schere 3 zu fördern, kommt in den meisten Fällen eine Rückzugeinrichtung 4 als Fertigungskomponente zum Einsatz. Dabei muss beispielsweise mit einer Greifvorrichtung (Zange) als Einzelschrittkomponente sehr nahe an das Untermesser gefahren werden. Hierzu ist ein gewisser Platzbedarf erforderlich, um Kollisionen mit dem Obermesser (bzw. Rundmesser) zu vermeiden. Dadurch ergeben sich unterschiedliche Bauformen der Scheren 3.

Die Rückzugeinrichtung 4 dient zum Fördern der Materialbahn in die Schere 3 bzw. zieht das gegriffene Cordband durch die Schere 3, wie zuvor beschrieben. Die Schere 3 weist ferner ein Transportband auf, das den geschnittenen Cordbandabschnitt aufnimmt und ihn aus der Schere 3 transportiert. Ein solcher Förderer kann als einzelner Bandgurt, in Form mehrerer Bandgurte oder in Form mehrerer Bandgurte mit einer zwischengeschalteten Hochhebeeinrichtung ausgeführt sein.

Der Cordbandabschnitt wird sodann auf eine erste Fördereinrichtung in Form eines Bandes 5 einer Spleißeinrichtung 7, hier einem Überlappspleißer 14, gegeben, und der eigentlichen Spleißeinheit zugeführt. Hierzu kann auch eine Aufnahmeeinrichtung vorgesehen sein, wie oben bezüglich der DE 20 2005 011 692 U1 beschrieben. Diese erste Fördereinrichtung 5 kann grundsätzlich auch mit der Fördereinrichtung, die der Schere 3 zugeordnet ist, zusammenfallen, so dass sich zwischen dem eigentlichen Überlappspleißer 14 und der Schere 3 nur eine, bezogen auf den Überlappspleißer 14 dann erste, Fördereinrichtung befindet. Der Überlappspleißer 14 dient zum Verbinden (rein mechanisch, ohne Zuhilfenahme von Zusatzstoffen) der zuvor geschnittenen Bandabschnitte. Er ist im Winkel verschwenkbar, um das Bandmaterial in verschiedenen Winkeln verarbeiten zu können.

Optional ist noch eine weitere Spleißvorrichtung in Form eines Stumpfspleißers 15 als Teil der Spleißeinrichtung 7 vorgesehen, der anstelle des Überlappspleißers 14 verwendet werden kann, wenn diese Spleißart erforderlich ist.

Dem Überlappspleißer 14 respektive seiner zweiten Fördereinrichtung (bzw. dem alternativen Stumpfspleißer 15) nachgeschaltet ist eine optional vorzusehende Beruhigungsrolle 9. Hierbei handelt es sich lediglich um eine angetriebene Rolle, die das zusammengespleißte Cordband, das von der Spleißeinrichtung 7 kommt, in die nächste Fertigungskomponente transportiert. Hierbei erfährt das zusammengespleißte Cordband durch den Transport über die Beruhigungsrolle 9 eine Gegenbiegung. Durch die Gegenbiegung zieht sich das Material in Längsrichtung zusammen. Hintergrund ist somit, die Dehnung des Materials in Längsrichtung bei der Verarbeitung in der erfindungsgemäßen Spleißeinrichtung 7 zu reduzieren. Während des Abtransports wird in der Schere 3 bereits der nächste Bandabschnitt geschnitten.

Der (optionalen) Beruhigungsrolle 9 nachgeschaltet ist sodann im dritten Ausführungsbeispiel gemäß Fig. 3 ein Slitter 10 als weitere Fertigungskomponente vorgesehen, der das zusammengespleißte Cordband in zwei, insbesondere gleich große, Teilbänder aufteilt. Beispielsweise kann an einem Rahmengestell eine Schneideinheit angeordnet sein, die zum Trennen des zugeführten zusammengespleißten Cordbandes in mindestens zwei Cordbandstreifen dient. Üblicherweise sind hierzu zwei miteinander zusammenwirkende Rundmesser vorgesehen. Weiterhin vorgesehen sein kann ein Steuerrahmen, der um eine vertikale Schwenkachse relativ zum Rahmengestell verschwenkbar ist. Über den Steuerrahmen läuft das Cordband. Es gelangt vom Steuerrahmen in den Bereich der Schneideinheit, wo es in die beiden Cordbandstreifen geteilt wird. Es sind auch andere Variationen denkbar.

Gemäß Fig. 1 folgt der optionalen Beruhigungsrolle 9 eine ebenso optionale Belegevorrichtung 12, gemäß Fig. 3 folgen dem Slitter 10 entsprechend zwei ebenfalls optionale Belegevorrichtungen 12. In dieser Fertigungskomponente werden auf die erzeugte Materialbahn, also die zusammengespleißten, im dritten Ausführungsbeispiel auch geslitteten Cordbandstreifen, noch weitere Gummistreifen, beispielsweise ein bis zwölf Stück, aufgelegt. Das Auflegen kann von oben und/oder von unten erfolgen. Des Weiteren werden häufig die Außenkanten der Materialbahn eingefasst, d. h. ein Gummistreifen wird von der Außenkante ohne oder mit Überstand aufgelegt und um die Gummikante herumgelegt, um die an der Außenkante, die der Schnittkante entspricht, freiliegenden Cordfäden zu ummanteln.

In jedem Fall vorgesehen ist eine Aufwickelstation 13 im Fall der Fig. 1 bzw. sind zwei Aufwickelstationen 13 im Fall der Fig. 3. In diesen Fertigungskomponenten werden die, ggf. geslitteten, Cordbandstreifen wieder mit einer Zwischenlage, die das Verkleben verhindert, auf Spulen gewickelt. Auch hier gibt es verschiedene Ausführungsformen, die von recht einfachen Einfachaufwicklern, in denen das Material manuell abgeschnitten und an einer neuen Rolle aufgewickelt werden muss, bis hin zu vollautomatischen Aufwicklern, in denen für das Materialhandling keinerlei Bedieneingriffe notwendig sind, reichen.

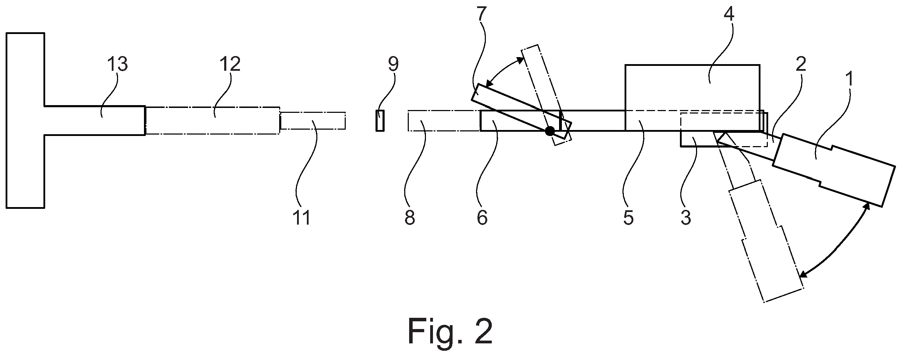

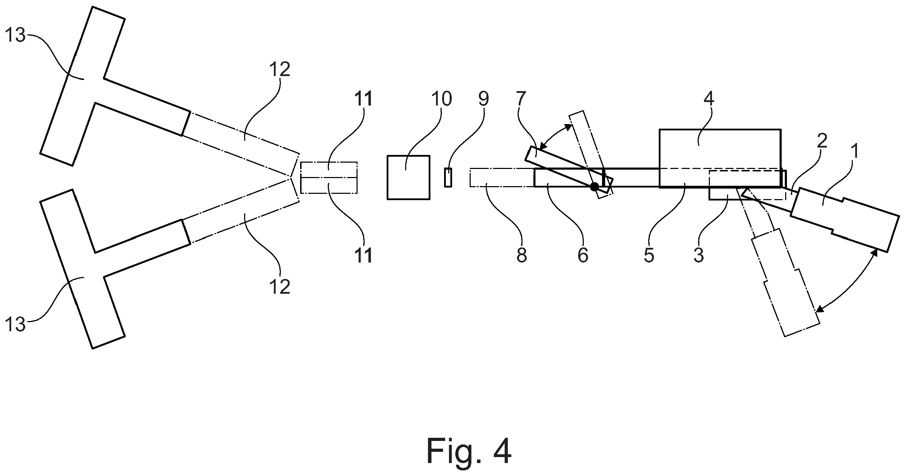

Fig. 2 und Fig. 4 zeigen beispielhafte Layouts von Gürtelanlagen einmal ohne und einmal mit Slitter 10 als zweites und viertes Ausführungsbeispiel einer erfindungsgemäßen Fertigungsanlage. Fertigungskomponenten, die bereits in den Layouts der Fig. 1 und der Fig. 3 beschrieben wurden, sind, sofern vorgesehen, mit gleichen Bezugszeichen versehen, ihre Funktion ist die gleiche wie zu Fig. 1 und Fig. 3 beschrieben.

Vorgesehen ist eine Abwickelstation 1, die hier jedoch um einen deutlich größeren Winkel verschwenkbar ist. Der Abwickler kann beliebigen Typs sein, wie bereits zuvor beschrieben.

Der Abwickelstation 1 folgt die Schere 3. Die Materialunterstützung 2 ist mit der Abwickelstation 1 verbunden. Sie schwenkt im Bedarfsfall gemeinsam mit ihr.

Die Schere 3 dient zum Abschneiden von Cordbandstreifen in einer definierten Breite und einem definierten Winkel. Als Schere 3 können die vorher beschriebenen Scherentypen, sofern sie für Gürtelanlagen geeignet sind, verwendet werden.

Der Schere 3 folgt eine Rückzugeinrichtung 4, wie sie zuvor beschrieben wurde. Sie dient zum Fördern der Materialbahn in die Schere 3 bzw. zieht das gegriffene Ausgangsband durch die Schere 3, wie zuvor beschrieben.

Der Cordbandabschnitt wird sodann auf die erste Fördereinrichtung (in Form eines Bandes 5) einer Spleißeinrichtung 7, die einen Überlapp- oder Stumpfspleißer umfassen kann, gegeben, und der entsprechenden eigentlichen Spleißvorrichtung zugeführt. Die Spleißvorrichtung ist um einen beachtlichen Winkel zur Einstellung des erforderlichen Spleißwinkels verschwenkbar. Sie weist ferner ein Abtransportband 6 als Fördereinrichtung auf, mit dem das zusammengespleißte Cordband der nachgeschalteten Fertigungskomponente zugeführt wird.

Optional kann der Spleißeinrichtung 7 noch ein Band 8 zum Handspleißen, also zur manuellen Verbindung der Bandabschnitte, nachgeschaltet sein. Während dieser manuellen Bearbeitung ist die automatische Spleißeinrichtung 7 außer Betrieb. Ein solches Handspleißen ist bei bestimmten Cordbandmaterialien, sehr schmalen Abschnittsbreiten oder auf Wunsch eines Kunden erforderlich. Optional kann auch in dem zweiten Ausführungsbeispiel eine Beruhigungsrolle 9 vorgesehen werden.

Als weitere Fertigungskomponente folgt im Ausführungsbeispiel der Fig. 4 ein Slitter 10. Die über den Slitter 10 erfolgende Trennung der gespleißten Materialbahn führt dazu, dass in diesem Fall zwei Aufwickelstationen 13 vorzusehen sind, denen jeweils optional jeweils eine Belegevorrichtung 12 und/oder ein Reparaturband 11 vorgeschaltet sein kann. Im Fall der Fig. 2 ohne Slitter 10 sind diese Fertigungskomponenten nur einmal erforderlich. Sollten Fehler im Band erkannt werden, können sie mittels des Reparaturbands 11 repariert werden.

Wenngleich in diesen und auch folgenden Darstellungen das Cordband von rechts nach links gefördert wird, ist es selbstverständlich möglich, das Layout auch in umgekehrter, spiegelbildlicher Ausführung auszulegen, also das Cordband von links nach rechts zu transportieren. Alle als optional beschriebenen Fertigungskomponenten können in unterschiedlicher Kombination zusammen mit den wesentlichen Fertigungskomponenten vorgesehen werden. Deshalb sind unterschiedliche Layouts aus allen beschriebenen Fertigungskomponenten erstellbar.

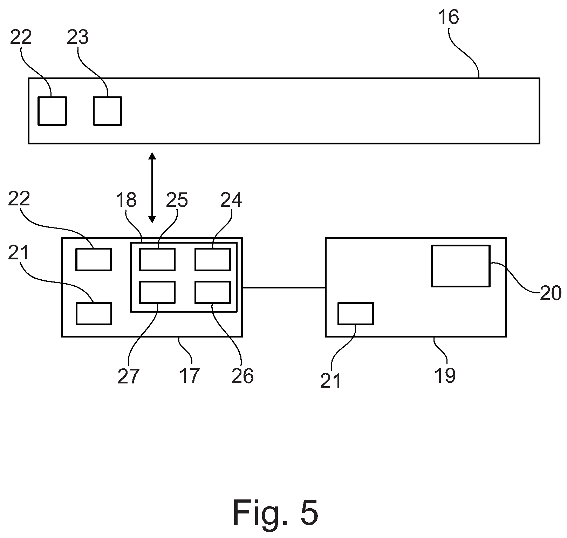

Fig. 5 zeigt schematisch die Steuerungs-, Bedien- und Überwachungsstruktur der Fertigungsanlage, insbesondere also der Gürtelanlage oder der Karkassenanlage. Neben der Anordnung 16 von Fertigungskomponenten weist die Fertigungsanlage eine Steuereinrichtung 17 auf, die vorliegend eine Überwachungseinrichtung 18 sowie gegebenenfalls weitere Komponenten umfasst. Über die Steuereinrichtung 17 kann der Betrieb der Fertigungskomponenten der Anordnung 16 gesteuert werden. Die Steuereinrichtung 17 ist auch mit einer Bedieneinrichtung 19 verbunden, über die Benutzereingaben eines Benutzers/einer Bedienperson entgegengenommen werden können. Die Bedieneinrichtung 19 weist auch eine Anzeigeeinrichtung 20, vorliegend ein Display bzw. Bildschirm, auf. Es sei angemerkt, dass eine Benutzeroberfläche auch über einen Internetzugang oder dergleichen bereitgestellt werden kann. Die Steuereinrichtung 17 und die Bedieneinrichtung 19 können wenigstens teilweise integriert ausgeführt sein, das bedeutet, Komponenten der Steuereinrichtung 17 können in Baueinheiten bzw. Baugruppen der Bedieneinrichtung 19 verbaut sein und umgekehrt.

Die Steuereinrichtung 17 und/oder die Bedieneinrichtung 19 umfasst darüber hinaus ein Speichermittel 21, in dem neben anderen Informationen vorliegend auch Betriebsparameter (bzw. konkret deren Werte), Zykluszeiten und Fertigungswerte (die wenigstens teilweise Werten von Betriebsparametern entsprechen können) sowie Maßnahmenbedingungen gespeichert werden können. Hierzu ist zunächst anzumerken, dass einem Fertigungsvorgang zur Herstellung eines bestimmten Fertigungsprodukts üblicherweise ein sogenanntes Rezept zugrundeliegt, welches Vorgabeparameter, die das Fertigungsprodukt beschreiben (beispielsweise Schnittwinkel der Schere 3, gewünschte Breite) sowie gegebenenfalls weitere Betriebsparameter, beispielsweise eine zu erzielende Ausbringung, umfasst. Die durch das Rezept des aktuellen Fertigungsvorgangs beschriebenen Betriebsparameter sind während des Fertigungsvorgangs üblicherweise nicht veränderbar. Sie können beispielsweise an der Bedieneinrichtung 19 eingegeben und/oder von einem Datenträger und/oder Server ausgelesen werden.

Im Rahmen eines zur Umsetzung eines bestimmten Rezepts durchgeführten Fertigungsvorgangs existieren auch einstellbare, also beispielsweise benutzerseitig wählbare, Betriebsparameter. Einstellbare Betriebsparameter können während des Betriebs durch die Steuereinrichtung 16 automatisch, beispielsweise mittels Regelungen, angepasst werden, wenigstens teilweise aber auch durch die Bedienperson mittels der Bedieneinrichtung 19. Veränderungen der Betriebsparameter, beispielsweise ausgehend von einem Basissatz für ein Rezept, dienen grundsätzlich der Optimierung des Fertigungsvorgangs bzw. des Fertigungsprodukts.

Die Steuereinrichtung 17 und ihr Steuerbetrieb sind übergeordnet, erfassen also alle Fertigungskomponenten der Anordnung 16. Wenigstens einer der einstellbaren Betriebsparameter betrifft mehrere oder sogar alle Fertigungskomponenten, beispielsweise eine Fördergeschwindigkeit des Bandmaterials durch die Anordnung 16.

Die Überwachungseinrichtung 18 dient zur Überwachung des Betriebs der Fertigungsanlage während eines Fertigungsvorgangs gemäß einem bestimmten Rezept. Sie nutzt dabei als Eingangsdaten von wenigstens einem Zykluszeiterfassungsmittel 22 erfasste Zykluszeiten für wenigstens eine zu überwachende Fertigungskomponente, wobei vorliegend wenigstens die Abwickelstation 1, die Schere 3, die Rückzugeinrichtung 4 und die Spleißeinrichtung 7 zu überwachende Fertigungskomponenten sind. Weitere Fertigungskomponenten, wie beispielsweise der Slitter 10, die Belegevorrichtung 12, das Reparaturband 11 und dergleichen können selbstverständlich auch überwacht werden.

In den vorliegend näher diskutierten Ausführungsbeispielen wird das Zykluszeiterfassungsmittel 22 durch eine Erfassungseinheit der Steuereinrichtung 17 gebildet und fragt Steuersignale, beispielsweise Bereitschaftssignale, Triggersignale und dergleichen, von Fertigungskomponenten und/oder ihren Einzelschrittkomponenten ab, deren Zeitstempel die Startzeitpunkte und/oder Endzeitpunkte von Zykluszeiten beschreibt. Wenigstens teilweise können Startzeitpunkte und/oder Endzeitpunkte auch durch Zykluszeiterfassungsmittel der Anordnung 16 selbst, beispielsweise Sensoren und/oder sonstige Geber, erfasst werden.

In diesem Zusammenhang ist bereits anzumerken, dass Fertigungskomponenten während des Fertigungsvorgangs einen sich wiederholenden jeweiligen Zyklus durchlaufen, beispielsweise die Schneideinrichtung/Schere 3 wiederholt Materialabschnitte abtrennt, die Rückzugeinrichtung 4 wiederholt Material durch die Schere 3 zieht und die Spleißeinrichtung 7 wiederholt Materialabschnitte zu dem Endlosband zusammenspleißt. Diese Zyklen werden jeweils durch Einzelschritte gebildet, wobei vorliegend für jeden dieser Einzelschritte eine Zykluszeit ermittelt wird. Das bedeutet, die Summe der Zykluszeiten der Einzelschritte (Einzelschritt-Zykluszeiten) entspricht der Gesamtzyklus-Zykluszeit, also der Dauer eines Zyklus. Die Einzelschritte werden hierbei insbesondere durch Einzelschrittkomponenten der Fertigungskomponenten, hier der Rückzugeinrichtung 4 und der Schere 3, durchgeführt. Beispielsweise kann eine Zange bzw. Zangenanordnung als Einzelschrittkomponente der Rückzugeinrichtung 4 zugeordnet sein, eine eine Hebeeinrichtung und ein Hochhalter als Einzelschrittkomponente der Schere 3. Die Zuordnung kann funktional oder baulich erfolgen, wobei es letztlich für die erfindungsgemäße Steuerstruktur und Vorgehensweise nicht relevant ist, welcher Fertigungskomponente eine Einzelschrittkomponente zugeordnet ist.

Optional können zusätzlich zu dem Zykluszeiterfassungsmittel 22 auch weitere Erfassungsmittel 23 vorgesehen sein, die zur Erfassung wenigstens eines Fertigungswerts, der gemeinsam mit wenigstens einer der Zykluszeiten auszuwerten ist, ausgebildet sind. Fertigungswerte können beispielsweise Betriebsparameter, die in der Steuereinrichtung 17 vorliegen bzw. verwendet werden, sein, aber auch durch Sensoren erfasste Fertigungsumstände beschreiben, beispielsweise Temperaturen, Bewegungen und Positionen des Materials, Verarbeitungsbedingungen (beispielsweise eine Temperatur) und dergleichen.

Um die erfassten Zykluszeiten auswerten zu können, umfasst die Überwachungseinrichtung 18 der Steuereinrichtung 17 vorliegend zunächst eine Überwachungseinheit 24. Die Überwachungseinheit 24 überprüft die Erfüllung von Maßnahmenbedingungen, die jeweils wenigstens eine Zykluszeit auswerten und bei Erfüllung das Vorliegen einer Anomalie im Fertigungsvorgang anzeigen. Jeder Maßnahmenbedingung ist dabei wenigstens eine Steuermaßnahme zugeordnet, die bei Erfüllung der Maßnahmenbedingung durch eine Maßnahmeneinheit 25 der Überwachungseinrichtung 18 ausgeführt wird. Die wenigstens eine Steuermaßnahme kann beispielsweise die Ausgabe eines Hinweises auf das Vorliegen der entsprechenden Anomalie, beispielsweise eines Warnhinweises, betreffen, aber auch einen auf die Anomalie bezogenen Eingriff in den Fertigungsvorgang, beispielsweise die Anpassung eines einstellbaren Betriebsparameters, das Wegfallen eines optionalen Einzelschritts oder in extremen Fällen einen Nothalt, also eine zumindest zeitweise und/oder teilweise Unterbrechung des Fertigungsvorgangs.

Die Überwachungseinrichtung 18 erlaubt auch eine weitergehende Auswertung der Zykluszeiten in einer Auswertungseinheit 26. Diese wertet die Zykluszeiten dahingehend aus, ob eine vorausschauende Wartung notwendig ist, wofür beispielsweise wenigstens eine Wartungsbedingung, die bevorzugt einen Verlauf von Zykluszeiten auswertet, überprüft werden kann. Beispielsweise kann das Vorliegen wenigstens einer Drift wenigstens einer Zykluszeit überprüft werden. Bei Erfüllung der Wartungsbedingung wird die vorausschauende Wartung terminiert. Die Zykluszeiten werden in der Auswertungseinheit 26 jedoch auch zur Optimierung des Fertigungsvorgangs ausgewertet, beispielsweise zur Anpassung eingestellter Betriebsparameter des aktuellen Fertigungsvorgangs und/oder zukünftiger Fertigungsvorgänge desselben Rezepts.

Dabei sei allgemein angemerkt, dass jegliche Auswertung in der Überwachungseinrichtung rezeptbezogen erfolgen, das bedeutet, zu erfassende Zykluszeiten, Maßnahmenbedingungen und/oder Wartungsbedingungen/Optimierungsvorgänge sind allesamt für ein bestimmtes Rezept formuliert.

Konkret kann hierbei beispielsweise vorgesehen sein, dass zunächst für ein Rezept, zu dem noch kein Fertigungsvorgang auf der Fertigungsanlage durchgeführt wurde, vorgegebene Maßnahmenbedingungen (sowie gegebenenfalls Auswertungsparameter der Auswertungseinheit 26) verwendet werden, beispielsweise basierend auf Testläufen, anderen Fertigungsanlagen und/oder ähnlichen Rezepten. Nachdem Maßnahmenbedingungen insbesondere wenigstens teilweise Grenzwertbedingungen sein können, bei denen wenigstens eine der wenigstens einen auszuwertenden Zykluszeit mit einem oberen und/oder einem unteren Grenzwert verglichen wird, können vorgegebene Grenzwerte beispielsweise grundsätzlich erwartete Intervalle für bestimmte Zykluszeiten beschreiben.

In den hier beschriebenen Ausführungsbeispielen ist jedoch vorgesehen, an der speziellen Fertigungsanlage für ein bestimmtes Rezept, gegebenenfalls auch kontinuierlich, den normalen Ablauf des entsprechenden Fertigungsvorgangs zu lernen, um Anomalien besonders genau, verlässlich und robust detektieren zu können. Hierzu werden in einer Lernphase - gegebenenfalls bei paralleler Überwachung anhand der vorgegebenen Maßnahmenbedingungen - die Zykluszeiten, gegebenenfalls mit den jeweiligen Fertigungswerten, erfasst. Die Lernphase kann beispielsweise wenigstens einen Teil eines Referenz-Fertigungsvorgangs, der nach einer Einlaufphase beginnt, umfassen, gegebenenfalls den gesamten ersten Fertigungsvorgang eines bestimmten Rezepts (ohne Einlaufphase). Beispielsweise kann zum Beginnen der Lernphase gefordert werden, dass wenigstens eine vorbestimmte Anzahl von Zyklen ohne Abbruch/Neustart durchgelaufen ist, insbesondere wenigstens zehn Spleißvorgänge ohne Abbruch erfolgt sind.

Denkbar ist beim kontinuierlichen Lernen jedoch auch ein gleitendes Zeitfenster als Lernphase, wobei allerdings, um das Erlernen von eine Anomalie anzeigenden Drifts zu vermeiden, ein vorgegebener zeitlicher Abstand zum aktuellen Zeitpunkt eingehalten werden sollte. Beispielsweise kann nach Bestätigung, dass jener normal verlaufen ist, immer der vorangehende Fertigungsvorgang desselben Rezepts ausgewertet werden, um die geeigneten Maßnahmenbedingungen, insbesondere die Grenzwerte, zu ermitteln bzw. zu aktualisieren. Es sei angemerkt, dass bei der Verwendung von Grenzwerten diese beispielsweise von einem ebenso durch die jeweilige Maßnahmenbedingung auszuwertenden Fertigungswert abhängig sein können. Die Ermittlung von Maßnahmenbedingungen im Allgemeinen und Grenzwerten im Speziellen kann durch eine Ermittlungseinheit 27 der Überwachungseinrichtung 18 erfolgen.

Zweckmäßig können Maßnahmenbedingungen so formuliert sein, dass sich auch eine konkrete Schlussfolgerung ergibt, die die detektierte Anomalie näher beschreibt. Das bedeutet, dass bei bestimmten Abweichungen/verletzten Grenzwerten beispielsweise auf bestimmte Fehler oder sonstige Anomalien genauer geschlossen werden kann. Dies ist insbesondere aufgrund der Aufteilung des Zyklus in Einzelschritte und der Ermittlung von Zykluszeiten für diese Einzelschritte zweckmäßig und detaillierter möglich. Zweckmäßig kann es auch sein, Maßnahmenbedingungen hierarchisch zu gliedern, beispielsweise zunächst für die Gesamtzyklus-Zykluszeit zu überprüfen, ob generell das Vorliegen einer Anomalie angezeigt wird, wonach untergeordnete Maßnahmenbedingungen diese Anomalie genauer zu klassifizieren bzw. zu lokalisieren suchen.

Es sei noch angemerkt, dass sich, auch allgemein gesprochen, besondere Vorteile dann ergeben können, wenn zumindest für wenigstens teilweise parallel ablaufende Zyklen aufweisende und/oder funktional zusammenwirkende Fertigungskomponenten wenigstens eine Maßnahmenbedingung auch jeweils wenigstens eine Zykluszeit beider Fertigungskomponenten auswertet, da dies zu einer noch genaueren Zuordnung und/oder Klassifizierung einer detektierten Anomalie beitragen kann. Dies kann beispielsweise die Rückzugeinrichtung 4 und die Schere 3 betreffen. Auch eine Zusammenschau von Zykluszeiten an mehr als zwei Fertigungskomponenten ist denkbar. Zudem sei darauf hingewiesen, dass im Sinne der bereits erwähnten Integration beispielsweise die Einheiten 22, 24, 26 und 27 in einer Baueinheit oder Baugruppe, die der Bedieneinrichtung 19 zugeordnet ist und beispielsweise die Anzeigeeinrichtung 20 enthalten kann, implementiert sein können.

Im Folgenden wird nun ein Ausführungsbeispiel des erfindungsgemäßen Verfahrens zur Überwachung des Betriebs der Fertigungsanlage diskutiert, wobei ein Fokus auf die Rückzugeinrichtung 4, welche auch Einzelschrittkomponenten der Schere 3 nutzen kann, gelegt wird, zu der rein beispielhaft mögliche Einzelschritte illustriert sind. Selbstverständlich lassen sich diesbezüglich auch verschiedenste, im Stand der Technik grundsätzlich bekannte Modifikationen hinsichtlich des Aufbaus der Rückzugeinrichtung 4 sowie der konkreten Einzelschritte anwenden. Mit anderen Worten ist das hier dargelegte konkrete Beispiel rein illustrativ zu verstehen.

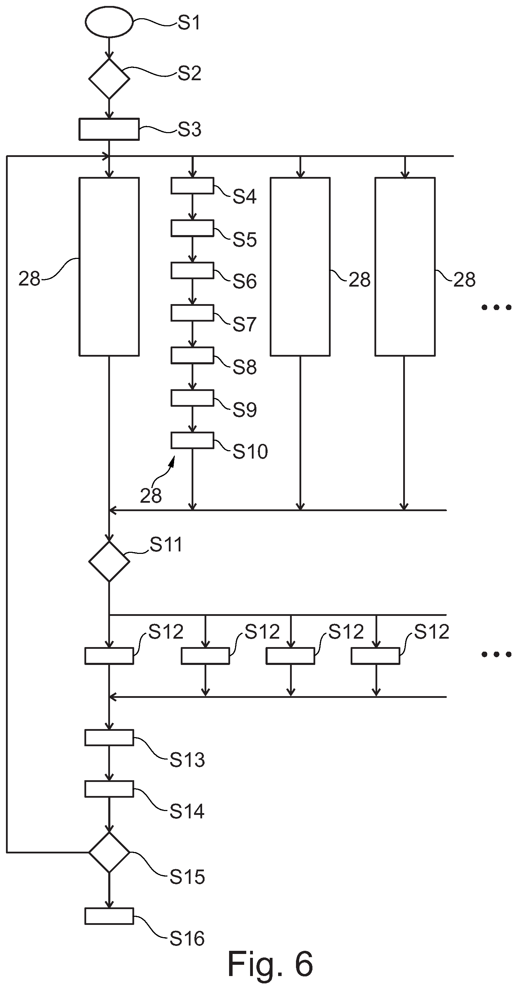

Wie Fig. 6 zeigt, beginnt in einem Schritt S1 ein neuer Fertigungsvorgang zu einem bestimmten Rezept, welches auch entsprechend geloggt, insbesondere also in dem Speichermittel 21 gespeichert wird. Vorliegend wird davon ausgegangen, dass für dieses Rezept bereits Maßnahmenbedingungen, insbesondere gelernte Grenzwerte, vorliegen.

In einem Schritt S2 wird dann überprüft, ob die Fertigungsanlage stabil läuft, mithin eine Einlaufphase abgeschlossen ist. Hierzu ist es erforderlich, dass zehn Zyklen ohne Unterbrechung durchlaufen sind, insbesondere also zehn Spleiße ohne Unterbrechung produziert worden sind.

Ist dies der Fall, wird die Überwachung, insbesondere also auch die Erfassung und Auswertung von Zykluszeiten, in einem Schritt S3 freigegeben. Gelingen keine zehn Spleiße ohne Unterbrechung, wird wieder erneut begonnen, bis dies gelingt.

Im Folgenden werden also nun mittels des Zykluserfassungsmittels 22 die Zykluszeiten und parallel mittels der weiteren Erfassungsmittel 23 Fertigungswerte erfasst. Dies ist nur durch entsprechende Schritte S4 bis S10 für die Rückzugeinrichtung 4 genauer gezeigt und ansonsten der Einfachheit halber durch Schrittblöcke 28 abstrahiert. Schrittblöcke 28 sind vorliegend zusätzlich wenigstens für die Abwickelstation 1, die Schere 3 und die Spleißeinrichtung 7, bevorzugt auch für weitere Fertigungskomponenten, vorgesehen.

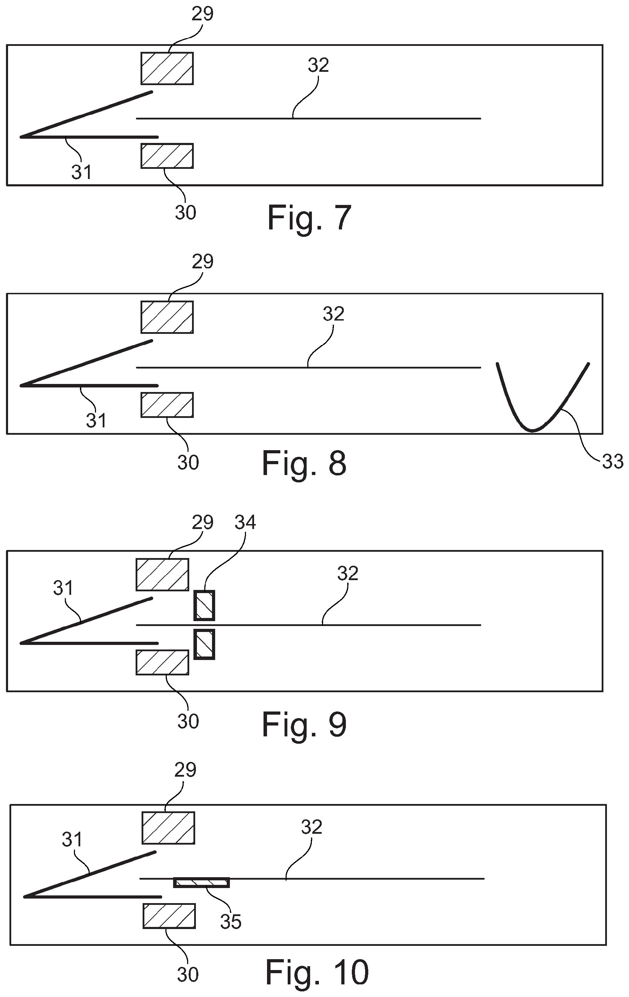

In einem Schritt S4 im Schrittblock 28 für die Rückzugeinrichtung 4 wird zunächst ein allgemeines Startsignal/Triggersignal erfasst, welches bei jedem Zyklus nach dem ersten Zyklus beispielsweise anzeigen kann, dass eine Zange oder Zangenanordnung in eine Position nahe der Schneideinheit der Schere gefahren ist, und dessen Zeitstempel als Startzeit der ersten Einzelschritt-Zykluszeit geloggt. Der Zustand zu diesem Startzeitpunkt wird durch Fig. 7 schematisch näher erläutert, wobei zur Vereinfachung der Darstellung abstrakt lediglich das Obermesser 29 und das Untermesser 30 der Schere 3, einer Zangenanordnung (kurz Zange) 31 der Rückzugeinrichtung 4 und das Material 32 angedeutet sind.

Das allgemeine Startsignal weist die Rückzugeinrichtung 4 an, Material um eine vorbestimmte Länge, die durch den Rezept-Vorgabeparameter der Breite bestimmt wird, durch die Schere 3 zu ziehen, wozu allerdings Vorbereitungs-Einzelschritte nötig sind. Mithin wirkt das Startsignal gleichzeitig als Triggersignal für die Abwickelstation 1 bzw. eine entsprechende Einzelschrittkomponente ("Letoff") der Abwickelstation 1, um eine hinreichende Menge an Material in einer Schlaufe bereitzustellen. Ist dies geschehen, sendet diese ein Abschlusssignal bzw. Bereitschaftssignal, dessen Zeitstempel in einem Schritt S5 als Endzeitpunkt des ersten Einzelschritts und Startzeitpunkt des zweiten Einzelschritts wiederum durch das Zykluszeiterfassungsmittel 22, insbesondere die Erfassungseinheit, gespeichert wird. Zu diesem Zeitpunkt kann bereits die erste Zykluszeit für den ersten Einzelschritt grundsätzlich bereitgestellt werden.

Der entsprechende Zustand ist wiederum rein schematisch und abstrakt in Fig. 8 gezeigt, wo nun die gebildete Schlaufe 33 zusätzlich dargestellt ist. In diesem Fall ist an der Arbeit der Rückzugeinrichtung 4 also auch eine externe Einzelschrittkomponente der Abwickelstation 1 beteiligt.

Das Bereitschaftssignal der Abwickelstation 1 gilt für eine Einzelschrittkomponente der Rückzugeinrichtung 4 und/oder der Schere 3, beispielsweise eine auch als Niederhalter wirkende Hebevorrichtung, als Triggersignal, um diese Einzelschrittkomponente in eine Übergabeposition zu bewegen. Die Einzelschrittkomponente sendet dann, wenn dies der Fall ist, ein entsprechendes Bereitschaftssignal, dessen Zeitstempel im Schritt S6 wiederum geloggt wird. Der entsprechende Zeitpunkt bildet den Endzeitpunkt des zweiten Einzelschritts und den Startzeitpunkt des dritten Einzelschritts.

Fig. 9 illustriert den entsprechenden Zustand mit der Einzelschrittkomponente 34 als Niederhalter in Position.

Im nun folgenden dritten Einzelschritt wird auf ein Steuersignal (Bereitschaftssignal) einer als Hochhalteleiste wirkenden Einzelschrittkomponente gewartet, welche in diesem dritten Einzelschritt mithin in eine gewünschte Position, beispielsweise auf der aktuellen Höhe des Materials 32, verfahren wird. Der entstehende Zustand ist in Fig. 10 angedeutet, wobei angemerkt sei, dass die dort abstrakt gezeigte Einzelschrittkomponente 35 in vielen Fällen der Einzelschrittkomponente 34 entspricht, also der bereits erwähnten Hebevorrichtung. Der Zeitpunkt, zu dem das Bereitschaftssignal "Hochhalteleiste in Position" vorliegt, wird als Endzeitpunkt des dritten Einzelschritts im Schritt S7 protokolliert und dient auch als Startzeitpunkt für den vierten Einzelschritt.

In dem vierten Einzelschritt wird ein Hochhalter einer Einzelschrittkomponente 36 in Position gefahren, wobei das Erreichen dieser Position hinter der Schere 3 wiederum durch ein entsprechendes Bereitschaftssignal angezeigt wird. In diesem vierten Einzelschritt ist vorliegend auch enthalten, dass die Zange 31 das (im Einzelschritt zuvor angehobene) Material 32 greift, was jedoch auch als eigener Einzelschritt verwendet werden kann.

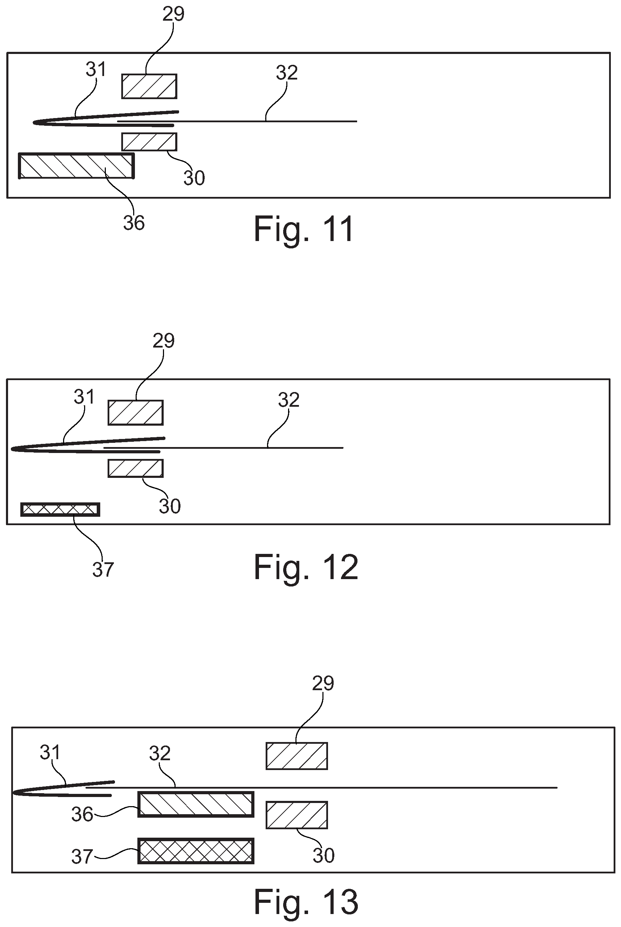

Der sich ergebende Zustand ist wiederum schematisch und abstrakt in Fig. 11 gezeigt, nun mit der geschlossenen Zange 31 und der als Hochhalter wirkenden Einzelschrittkomponente 36. Das entsprechende Bereitschaftssignal der Einzelschrittkomponente 36 bzw. der Zeitstempel des Vorliegens wird in einem Schritt S8 als Ende des vierten Einzelschritts und Beginn des fünften Einzelschritts gespeichert.

Im fünften Einzelschritt wird dann auch das Förderband 37, welches auch eine Einzelschrittkomponente bildet, zur Spleißeinrichtung 7 positioniert, wobei der Abschluss ebenso durch ein entsprechendes Bereitschaftssignal mitgeteilt wird. Der entsprechende Zeitpunkt wird als Endzeitpunkt des fünften Einzelschritts im Schritt S9 geloggt. Schematisch ist das Ergebnis in Fig. 12 gezeigt.

Im sechsten Einzelschritt, begonnen mit dem Bereitschaftssignal des Förderbands 37, erfolgt dann schließlich der Rückzug des Materials 32 durch die Schere 3 über die Einzelschrittkomponente 36 und das Förderband 37, beispielsweise, indem die Zange 31 mittels einer Traverse entsprechend bewegt wird. Auch der Abschluss dieses Einzelschritts wird als Steuersignal mitgeteilt und dient insbesondere als Triggersignal für den Schnitt mittels der Schere 3. Der sich ergebende Zustand ist in Fig. 13 schematisch gezeigt. Das Triggersignal wird im Schritt S10 als Endzeitpunkt des sechsten Einzelschritts gespeichert.

Die Zange 31 kann nach Schneiden und Abtransport wieder in die in Fig. 7 gezeigte Position verfahren werden, was durch das entsprechende Startsignal bzw. Bereitschaftssignal im Schritt S4 zu Beginn eines neuen Zyklus angezeigt wird.

In einem Schritt S11 wird dann überprüft, ob hinreichend viele Informationen für die Auswertung vorhanden sind, wobei eine Auswertung grundsätzlich auch bereits während eines Zyklus erfolgen kann und nicht zwangsläufig gewartet werden muss, bis der Zyklus abgeschlossen ist.

In jeweiligen Schritten S12 erfolgt dann durch die Überwachungseinheit 24 die Auswertung der so aufgenommenen Zykluszeiten für die verschiedenen Fertigungskomponenten, gegebenenfalls gemeinsam mit wenigstens einem Fertigungswert, durch die Maßnahmenbedingungen. Dabei kann jeweils ein Schritt S12 die einer zu überwachenden Fertigungskomponente zugeordneten Maßnahmenbedingungen bearbeiten. Dabei gilt das oben bereits Ausgeführte zur hierarchischen Struktur der Auswertung und zur Möglichkeit, in einzelnen Maßnahmenbedingungen auch Zykluszeiten unterschiedlicher Fertigungskomponenten zu berücksichtigen.

In einem Schritt S13 werden dann durch die Maßnahmeneinheit 25 die Maßnahmen der erfüllten Maßnahmenbedingungen, falls vorhanden, durchgeführt. Beispielsweise werden Warnhinweise ausgegeben und/oder Betriebsparameter des Fertigungsvorgangs angepasst.

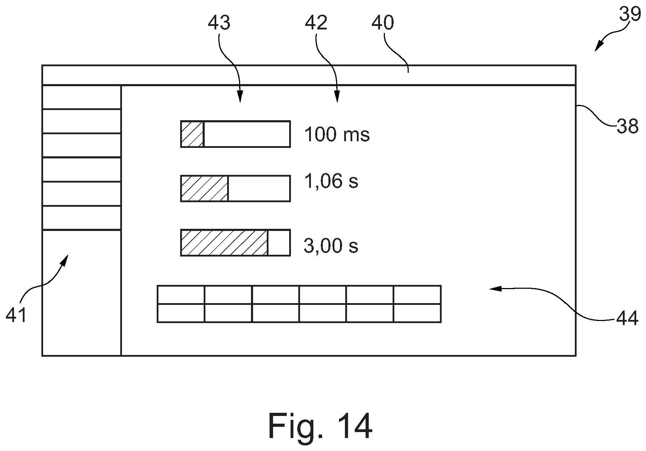

Im Schritt S14 erfolgt eine Ausgabe an der Anzeigeeinrichtung 20, wo innerhalb einer Benutzeroberfläche auch Zykluszeiten und zugehörige Informationen ausgegeben werden können. Eine beispielhafte Darstellung 38 einer Benutzeroberfläche 39 ist schematisch in Fig. 14 gezeigt. Für das hier beschriebene Vorgehen weniger relevante Elemente wie eine Statusleiste 40 und ein Menü 41 sollen nicht näher diskutiert werden.

Für eine ausgewählte Zykluszeit, beispielsweise eine einem Einzelschritt zugeordnete Zykluszeit oder eine Gesamtzyklus-Zykluszeit einer zu überwachenden Fertigungskomponente, werden im oberen Bereich der Darstellung 38 als Zahlen 42 und Balkendiagramme 43 von oben nach unten angezeigt:
- der untere, vorliegend gelernte, Grenzwert für die Zykluszeit,
- die zuletzt erfasste, aktuell vorliegende Zykluszeit, und
- der obere, vorliegend gelernte, Grenzwert für die Zykluszeit.

Für die Bedienperson ist einfach ersichtlich, dass die aktuelle Zykluszeit, wie gewünscht, zwischen dem unteren und dem oberen Grenzwert liegt. Sie kann beispielsweise grün dargestellt werden.

Im unteren Bereich der Darstellung 38 ist eine Tabelle 44 dargestellt, die bereits aufgenommene Zykluszeiten aus vorherigen Zyklen und/oder Fertigungsvorgängen desselben Rezepts zur weiteren Information wiedergibt, beispielsweise gemeinsam mit weiteren Informationen wie Erfassungszeiten und dergleichen.

Zurückkehrend zu Fig. 6 wird in einem Schritt S15 überprüft, ob der Fertigungsvorgang abgeschlossen ist oder ob noch weitere Zyklen folgen. Folgen noch weitere Zyklen, wird zu den Schrittblöcken 28 zurückgekehrt. Ist der Fertigungsvorgang jedoch beendet, können im Schritt S16 mittels der Auswertungseinheit 26, wie beschrieben, weitere Auswertungen der erfassten Zykluszeiten hinsichtlich der Optimierung von Fertigungsvorgängen mit dem Rezept und/oder zu terminierender vorausschauender Wartungen durchgeführt werden. Grundsätzlich ist es selbstverständlich auch denkbar, derartige Auswertungsvorgänge bereits während eines Fertigungsvorgangs durchzuführen, nachdem es dann beispielsweise möglich ist, die Auswirkungen angepasster Betriebsparameter auf die Zykluszeiten und die Fertigungswerte, beispielsweise bei der Optimierung, unmittelbar zu beobachten und beispielsweise Optimierungsprozesse durch Variation von Betriebsparametern durchzuführen.

## Patentansprüche

1. Fertigungsanlage für Gürtel- und/oder Karkassenband in der Reifenindustrie, aufweisend mehrere materialbearbeitende und/oder materialfördernde, in Abhängigkeit von Betriebsparametern ansteuerbare Fertigungskomponenten, eine Steuereinrichtung (17) zur Ansteuerung der Fertigungskomponenten und eine Bedieneinrichtung (19), wobei die Steuereinrichtung (17) eine Überwachungseinrichtung (18) zur Überwachung des Betriebs wenigstens einer zu überwachenden der Fertigungskomponenten aufweist, welche wenigstens eine Einzelschrittkomponente (34, 35, 36) zur Ausführung von Einzelschritten eines Zyklus zur Einwirkung auf das Material umfasst, **dadurch gekennzeichnet,**
**dass** an der zu überwachenden Fertigungskomponente wenigstens ein Zykluszeiterfassungsmittel (22) zur Erfassung einer Zykluszeit des Zyklus vorgesehen ist und die Überwachungseinrichtung (18) aufweist:
- eine Überwachungseinheit (24) zur Auswertung von von dem Zykluszeiterfassungsmittel (22) erfassten Zykluszeiten hinsichtlich der Erfüllung wenigstens einer Maßnahmenbedingung, die das Vorliegen einer Anomalie im Fertigungsvorgang anzeigt, und
- eine Maßnahmeneinheit (25) zur Durchführung wenigstens einer Steuermaßnahme, die einer erfüllten Maßnahmenbedingung zugeordnet ist und eine Ausgabe eines Hinweises auf das Vorliegen der entsprechenden Anomalie und/oder einen auf die Anomalie bezogenen Eingriff in den Fertigungsvorgang betrifft.

2. Fertigungsanlage nach Anspruch 1, **dadurch gekennzeichnet, dass** wenigstens ein weiteres Erfassungsmittel (23) zur Erfassung wenigstens eines weiteren, den Betrieb der Fertigungsanlage beschreibenden Fertigungswertes vorgesehen ist, wobei wenigstens eine der wenigstens einen Maßnahmenbedingung wenigstens einen des wenigstens einen Fertigungswertes zusätzlich auswertet.

3. Fertigungsanlage nach Anspruch 2, **dadurch gekennzeichnet, dass** wenigstens einer des wenigstens einen weiteren Fertigungswerts eine Bewegung und/oder eine Position des verarbeiteten Materials und/oder wenigstens eine Verarbeitungsbedingung, insbesondere eine Temperatur, betrifft.

4. Fertigungsanlage nach einem der vorangehenden Ansprüche, **dadurch gekennzeichnet, dass** die Erfassung der wenigstens einen Zykluszeit und die wenigstens eine Maßnahmenbedingung auf einen ein Rezept bildenden Satz von für den Fertigungsvorgang festgelegten Betriebsparametern der Fertigungsanlage bezogen sind.

5. Fertigungsanlage nach einem der vorangehenden Ansprüche, **dadurch gekennzeichnet, dass** das Zykluszeiterfassungsmittel (22) eingerichtet ist, zur Erfassung der Zykluszeit zwei aufeinanderfolgende Steuersignale, insbesondere Bereitschafts- und/oder Triggersignale, wenigstens einer der wenigstens einen Einzelschrittkomponente (34, 35, 36) und/oder wenigstens einer der wenigstens einen Fertigungskomponente abzufragen, und/oder wenigstens eine der wenigstens einen Zykluszeit als Dauer wenigstens eines der Einzelschritte zu ermitteln.

6. Fertigungsanlage nach Anspruch 5, **dadurch gekennzeichnet, dass** bei wenigstens einer auf wenigstens einen Einzelschritt bezogenen Zykluszeit die Überwachungseinheit (24) zur Zuordnung einer Anomalie zu wenigstens einem Einzelschritt eingerichtet ist und/oder wenigstens eine Maßnahmenbedingung zur Anzeige einer wenigstens einem Einzelschritt zuzuordnenden Anomalie bei Erfüllung formuliert ist.

7. Fertigungsanlage nach einem der vorangehenden Ansprüche, **dadurch gekennzeichnet, dass** wenigstens eine der wenigstens einen Maßnahmenbedingung eine Grenzwertbedingung ist, die wenigstens eine der wenigstens einen Zykluszeit mit einem zugeordneten oberen Grenzwert und/oder einem zugeordneten unteren Grenzwert vergleicht.

8. Fertigungsanlage nach Anspruch 7, **dadurch gekennzeichnet, dass** wenigstens einer des wenigstens einen Grenzwerts, insbesondere für zumindest ein Rezept, fest vorgegeben ist.

9. Fertigungsanlage nach Anspruch 7 oder 8, **dadurch gekennzeichnet, dass** die Überwachungseinrichtung (18) eine Ermittlungseinheit (27) zur Ermittlung wenigstens eines gelernten des wenigstens einen Grenzwerts in einer Lernphase des aktuellen und/oder eines zumindest rezeptgleichen Referenz-Fertigungsvorgangs aufweist.

10. Fertigungsanlage nach Anspruch 9, **dadurch gekennzeichnet, dass** die Lernphase für wenigstens einen gelernten Grenzwert ein gleitendes, mit dem aktuellen Zeitpunkt oder in einem vorgegebenen zeitlichen Abstand vor dem aktuellen Zeitpunkt endendes Zeitfenster ist und/oder die Lernphase für wenigstens einen gelernten Grenzwert ein, insbesondere nach einer Einlaufphase beginnender, Zeitabschnitt zu Beginn des aktuellen Fertigungsvorgangs oder des Referenz-Fertigungsvorgangs und/oder ein, zumindest nach der Einlaufphase, kompletter Referenz-Fertigungsvorgang, insbesondere der erste eines Rezeptes, ist.

11. Fertigungsanlage nach einem der vorangehenden Ansprüche, **dadurch gekennzeichnet, dass** die Überwachungseinrichtung (18) ferner eine Auswertungseinheit (26) aufweist, die zur Auswertung von über zumindest einen Zeitraum in einem Speichermittel (21) der Überwachungseinrichtung (18) gespeicherten, erfassten Zykluszeiten, insbesondere deren Verlauf, zur Ermittlung optimierter Betriebsparameter der Fertigungsanlage und/oder zur Terminierung einer vorausschauenden Wartung eingerichtet ist.

12. Fertigungsanlage nach einem der vorangehenden Ansprüche, **dadurch gekennzeichnet, dass** sie ferner eine Anzeigeeinrichtung (20) umfasst und die Steuereinrichtung (17) zur wenigstens teilweisen Ausgabe der wenigstens einen Zykluszeit und/oder einer daraus abgeleiteten Information an der Anzeigeeinrichtung (20) eingerichtet ist, insbesondere innerhalb einer Benutzeroberfläche (39) zur Bedienung und Überwachung der Fertigungsanlage.

13. Fertigungsanlage nach Anspruch 12, **dadurch gekennzeichnet, dass** die Ausgabe eine Anzeige der aktuellen Zykluszeit mit wenigstens einem Vergleichswert, insbesondere dem oberen und/oder dem unteren Grenzwert, umfasst.

14. Fertigungsanlage nach einem der vorangehenden Ansprüche, **dadurch gekennzeichnet, dass** die Fertigungskomponenten
- eine Abwickelstation (1) für ein Ausgangsband, insbesondere ein Cordband,
- eine Schere (3) zum Abschneiden von Bandabschnitten in einem vorgegebenen Winkel und einer vorgegebenen Breite von dem Ausgangsband von der Abwickelstation (1),
- eine Rückzugeinrichtung (4) zum Fördern des Ausgangsbandes durch die Schere (3),
- eine Spleißeinrichtung (7), insbesondere ein Stumpfspleißer (15) oder ein Überlappspleißer (14), zum Verbinden der durch die Schere (3) geschnittenen Bandabschnitte,
- wenigstens eine Aufwickelstation (13) für das Gürtel- und/oder Karkassenband, und
- wenigstens eine Fördereinrichtung umfassen.

15. Fertigungsanlage nach Anspruch 14, **dadurch gekennzeichnet, dass** wenigstens die Rückzugeinrichtung (4) eine zu überwachende Fertigungskomponente ist.

16. Computerimplementiertes Verfahren zur Überwachung des Betriebs einer Fertigungsanlage für Gürtel- und/oder Karkassenband in der Reifenindustrie, wobei die Fertigungsanlage mehrere materialbearbeitende und/oder materialfördernde, in Abhängigkeit von Betriebsparametern ansteuerbare Fertigungskomponenten, eine Steuereinrichtung (17) zur Ansteuerung der Fertigungskomponenten und eine Bedieneinrichtung (19) aufweist, wobei die Steuereinrichtung (17) eine Überwachungseinrichtung (18) zur Überwachung des Betriebs wenigstens einer zu überwachenden der Fertigungskomponenten aufweist, welche wenigstens eine Einzelschrittkomponente (34, 35, 36) zur Ausführung von Einzelschritten eines Zyklus zur Einwirkung auf das Material umfasst, **dadurch gekennzeichnet, dass** das Verfahren folgende Schritte während eines Fertigungsvorgangs umfasst:
- Erfassung einer Zykluszeit des Zyklus an der wenigstens einen zu überwachenden Fertigungskomponente durch wenigstens ein Zykluszeiterfassungsmittel (22),
- Auswertung von von dem Zykluszeiterfassungsmittel (22) erfassten Zykluszeiten hinsichtlich der Erfüllung wenigstens einer Maßnahmenbedingung, die das Vorliegen einer Anomalie im Fertigungsvorgang anzeigt,
- Durchführung wenigstens einer einer erfüllten Maßnahmenbedingung zugeordneten Steuermaßnahme, die einer erfüllten Maßnahmenbedingung zugeordnet ist und eine Ausgabe eines Hinweises auf das Vorliegen der entsprechenden Anomalie und/oder einen auf die Anomalie bezogenen Eingriff in den Fertigungsvorgang betrifft.

17. Computerprogramm, welches, wenn es auf einer Steuereinrichtung (17) einer Fertigungsanlage für Gürtel- und/oder Karkassenband in der Reifenindustrie ausgeführt wird, diese veranlasst, die Schritte eines Verfahrens nach Anspruch 16 durchzuführen.

18. Elektronisch lesbarer Datenträger, auf dem ein Computerprogramm nach Anspruch 17 gespeichert ist.
